# EUROPEAN PATENT SPECIFICATION

(11) **EP 0 384 083 B1**
(45) Date of publication and mention of the grant of the patent: **05.10.1994**
(21) Application number: 89313472.6
(22) Date of filing: 21.12.1989
(51) Int. Cl.: B29D 30/30

(54) **Method for aligning a belt-like member and apparatus therefor**
Verfahren und Vorrichtung zum Ausrichten eines bandförmigen Elementes
Procédé et dispositif pour aligner un élément en forme de bande

(30) Priority: 22.02.1989 JP 40263/89; 13.04.1989 JP 91896/89
(43) Date of publication of application: 29.08.1990
(73) Proprietor: Bridgestone Corporation, Tokyo 104 (JP)
(72) Inventor: Okuyama, Koji, Kawagoe-shi Saitama-ken (JP); Yamamoto, Makoto, Akikawa-shi Tokyo (JP); Ichinohe, Akihito, Kodaira-shi Tokyo (JP)
(74) Representative: Silverman, Warren

(56) References cited:
- EP-A- 0 125 882
- EP-A- 0 300 727
- FR-A- 2 496 616
- US-A- 4 769 104
- PATENT ABSTRACTS OF JAPAN, vol. 13, no. 206 (M-826)(3554) 16 May 1989 & JP-A-1 030 738 (BRIDGESTONE CORP.) 1 February 1989

## Description

The present invention relates to a method for aligning a belt-like member and apparatus therefor. More particularly, it relates to a method and apparatus for use in every step of a tyre forming process and which lend themselves particularly well to sticking a belt-like member made of a rubber sheet having a large number of cords buried in parallel therein on a forming drum.

Generally the manufacture of tyres involves the steps of cutting a rubber-coated cord-reinforced cloth having wires inserted therein at a predetermined bias angle, or at right angles to the wires into a predetermined length to form an elongated belt-like member, wrapping the thus formed belt-like member around a forming drum, and joining the leading end and the trailing end of the member.

In the prior art, normally the belt-like member was wrapped around and held to a forming drum for sticking purposes while being stretched in the longitudinal direction to an appropriate extent so that when wrapping of the belt-like member was complete, the leading end and the trailing end thereof might coincide with each other.

However, the cut angle of the cut end of the belt-like member could vary and hence the cut angles of the leading end edge and the trailing end edge were not always consistent, and it was fairly likely that even if one should try to make the leading and trailing end edges coincide with each other, there would occur deviation or overlap.

Therefore, an attempt to correct the cut surface of the belt-like member so as to have a predetermined inclination angle (Laid-Open Japanese Patent Specification No. 63-116838 (1989)) was proposed.

According to this proposal in the prior art, a swingable correcting arm is to be made to butt against the cut surfaces at the leading and trailing ends of the cut belt-like member to correct the inclination angles of these cut surfaces to a predetermined angle, so that the inclination angles of the end surfaces at the leading end and at the trailing end are made to coincide with each other, and the opposite end surfaces can be joined properly.

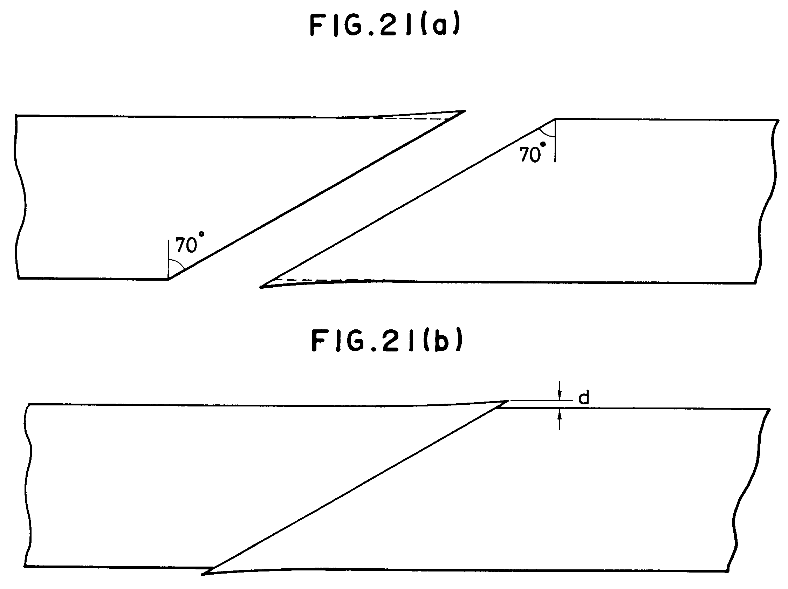

However, since the leading end surface and the trailing end surface of the belt-like member which are respectively cut with a certain inclination angle are forcibly corrected to a predetermined angle by making these end surfaces butt against a correcting arm, for instance, as shown in Fig. 21(a) of the accompanying drawings, if an end surface having a cut angle of say 71 degrees should be forcibly corrected so as to have a predetermined angle of 70 degrees, then an acute angle portion at the tip end would protrude from the join, and when both such end portions are joined together, the inconvenience of producing a step-shaped deviation d as shown in Fig. 21(b) of the accompanying drawings, is liable to occur.

In addition, any working on or treatment of a member after cutting into a predetermined length requires a separate treatment device and hence the apparatus becomes large-sized, necessary space is largely occupied, and an installation cost is increased.

Also in the prior art, EP-A-0125882 discloses a method and apparatus for applying a stabiliser ply to a tyre building drum. After the ply is cut, it is transferred to the drum by means of a manifold which attracts the ply using a vacuum. JP-A-1030738 relates to a device for bonding a belt-type member which detects the cut ends of the belt-type member at a plurality of positions in the widthwise direction so that the difference in angle between the cut ends can be obtained and corrected.

An object of the invention is thus to provide a method and an apparatus for joining together ends of a belt-like member, in which a step-shaped deviation of the cut ends of the belt-like member at a joining position can be prevented, the apparatus not involving building large-size high cost plant.

According to one aspect of the present invention, there is provided a method for aligning a belt-like member on a cylindrical drum, wherein the belt-like member is prepared by cutting raw material for the belt-like member at two locations, is conveyed by a conveyor and is wrapped around and stuck to the drum, comprising the steps of:
(i) making a first inclined cut across said raw material to form a leading end edge of the belt-like member and measuring the inclination angle of said first cut on said raw material;
(ii) conveying said raw material a first predetermined distance;
(iii) making a second inclined cut across the raw material at a similar angle to said first cut to form a trailing end edge of the belt-like member and measuring the inclination angle of said second cut on said raw material;
(iv) conveying the belt-like member a second predetermined distance and adjusting the attitude of the trailing end portion of the belt-like member on the basis of the measured inclination angles of the respective cuts, so that the trailing end edge is parallel to the leading end edge; and
(v) conveying the belt-like member in this corrected configuration and wrapping it around said cylindrical drum, with said leading and trailing end edges coinciding, by rotating the drum,
   **characterised in that**, in steps (i) and (iii), said raw material is cut on cutting support means whilst being fixedly attracted to said conveyor and said cutting support means, **in that**, in steps (ii) and (iv), the leading and trailing end edges, respectively, are lifted away from and conveyed over said cutting support means by holding means and are then fixedly attracted to the conveyor and conveyed said first and second predetermined distances, respectively, by said conveyor, **and in that** the raw material for the belt-like member that has not been cut is separated from the conveyor when the belt-like member is being wrapped around the drum.

According to a second aspect of the invention, there is provided apparatus for aligning a belt-like member on a cylindrical drum, wherein the belt-like member is prepared by cutting raw material for the belt-like member at two locations, is conveyed by a conveyor and is wrapped around and stuck to the drum, comprising:
a conveyor for conveying said raw material;
cutting means for making first and second inclined cuts across said raw material to form leading and trailing end edges of the belt-like member;
holding means for holding adjacent end portions of the belt-like member and raw material independently either side of the line of cut while maintaining the configurations of the end portions;
measuring means for measuring the inclination angle of said first and second cuts on said raw material; and
correction means for correcting the inclination angle of the trailing end edge of the belt-like member by changing the attitude of said holding means to conform the trailing end edge to attitude parameters assumed by the leading end edge and measured by said measuring means,
**characterised in that** the apparatus further comprises separating means for separating from the conveyor means the raw material for the belt-like member that has not yet been cut, cutting support means and means for fixedly attracting the raw material to the cutting support means and the conveyor, said raw material being cut whilst being fixedly attracted to said conveyor and said cutting support means, **and in that** said holding means is arranged to lift away from and convey over said cutting support means the leading and trailing end edges.

According to the present invention, since the inclination angle of the cut line at the leading end edge of a belt-like member has been measured previously and after cutting of the trailing end edge only the inclination angle of the cut line at the trailing end is corrected by changing the holding attitude of the trailing end portion so as to conform to the measured inclination angle of the cut line at the leading end edge, step-shaped deviation will hardly occur, and as the belt-like member is aligned on a cylindrical drum so that the configuration of the end portion is always being maintained, joining of the leading end and the trailing end can be effected properly.

More particularly, with the apparatus of this invention, the belt-like member is cut by the cutting means while it is held on an anvil by attraction means. Upon cutting the leading end edge, an inclination angle of the cut line is measured by the measuring means, and after cutting of the trailing end edge, the attitude of the holding means which holds the trailing end portion is changed by the correction means on the basis of the results of measurement by the aforementioned measure means. As a result, only the trailing end surface of the belt-like member can be corrected so as to conform to the inclination angle of the cut line of the leading end surface, and since only the trailing end portion is corrected, step-shaped deviation will hardly occur.

In addition, the apparatus of the invention enables the raw material of the belt-like member which has not yet been cut to be separated from the conveyor belt by the separation means, and only the cut belt-like member is conveyed and wrapped around the cylindrical drum.

Furthermore, since the end portions of the belt-like member have a configuration always maintained by such attraction means as aforesaid and by the holding means, when the belt-like member has been wrapped around the cylindrical drum, the leading and trailing end surfaces can be properly aligned.

These advances in construction can be achieved in a compact apparatus with consequential cost savings.

For a better understanding of the invention and to show how the same can be carried into effect, reference will now be made, by way of example only, to the accompanying drawings, wherein:
FIGURE 1 is a general side view of a belt-like member sticking apparatus according to one preferred embodiment of the present invention;
FIGURE 2 is a plan view, with part omitted, of the same apparatus;
FIGURE 3 is a schematic view showing an arrangement of magnet blocks provided within a conveyor;
FIGURE 4 is a cross-section view taken along line IV-IV in Figure 1 as viewed in the direction of arrows shown therein;
FIGURE 5 is a plan view showing a travelling mechanism in a travelling support base;
FIGURE 6 is a side view of the same;
FIGURE 7 is an end view of the same as viewed in the direction of an arrow VII in Figure 5;
FIGURE 8 is a side view partly in cross-section of an attraction device;
FIGURE 9 is a plan view of the same device;
FIGURE 10 is a front view partly in cross-section of the same device;
FIGURE 11 is a plan view of an attraction hand;
FIGURE 12 is a cross-section view taken along line XII-XII in Figure 11 as viewed in the direction of arrows shown therein;
FIGURE 13 is a cross-section view taken along line XIII-XIII in Figure 12 as viewed in the direction of arrows shown therein;
FIGURE 14 is a cross-section view taken along line XIV-XIV in Figure 12 as viewed in the direction of arrows shown therein;
FIGURES 15(a) and 15(b) together make up a schematic block diagram of a control system for the illustrated apparatus;
FIGURES 16(a) to 16(i) are schematic views showing the successive steps of the operation of the illustrated apparatus;
FIGURE 17 is a plan view showing a modification of a cutting device;
FIGURE 18 is a side view of the same;
FIGURE 19 is a cross-sectional view taken along line I X X-I X X in Figure 17 as viewed in the direction of arrows shown therein;
FIGURE 20 is an end view partly in cross-section taken along line XX-XX in Figure 17 as viewed in the direction of arrows shown therein; and
FIGURES 21(a) and 21(b) are schematic views showing the state of the end portions of a belt-like member when the end portions are joined together through a method of the prior art.

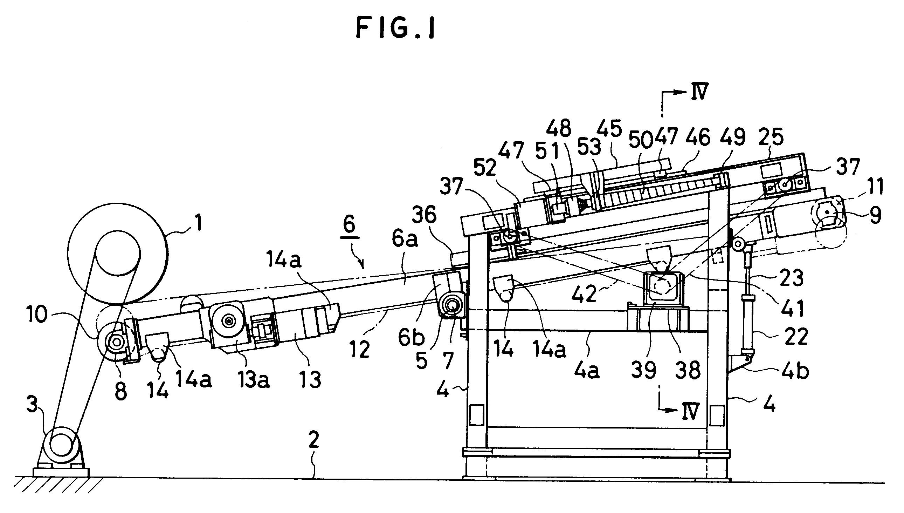

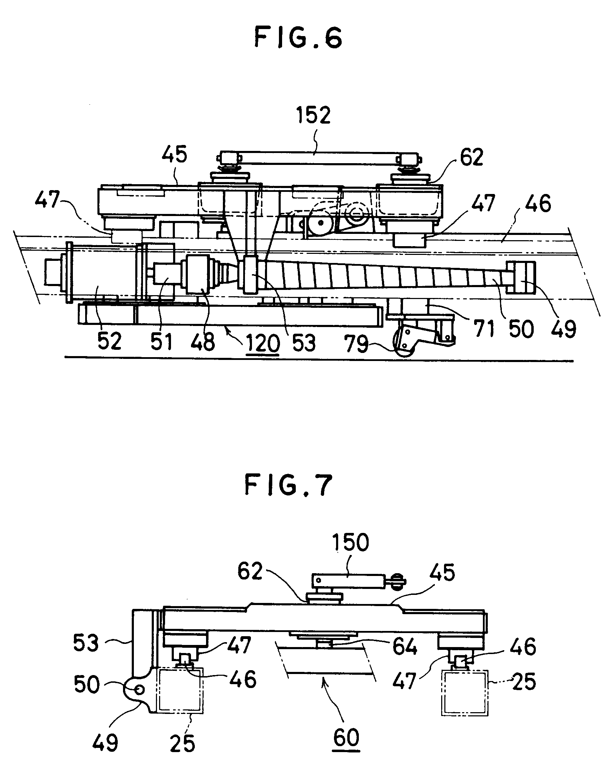

The present invention will now be described in greater detail in connection to one preferred embodiment of the invention as illustrated in Figures 1 to 16.

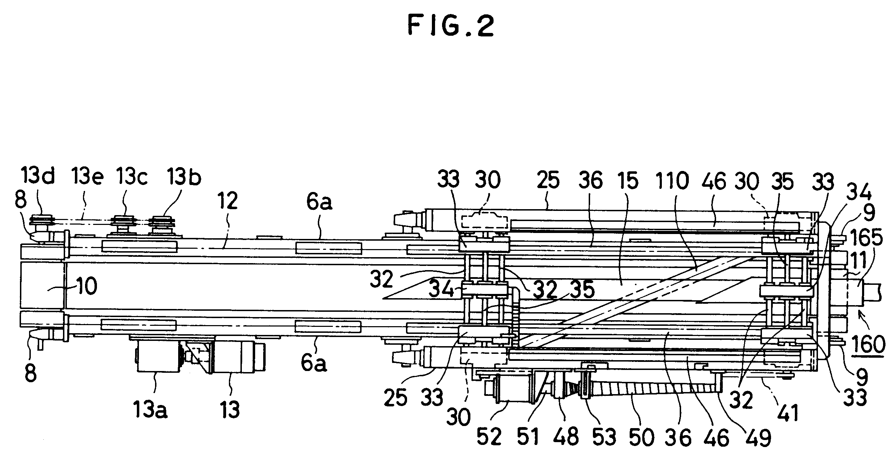

A belt-like member sticking apparatus according to one preferred embodiment of the present invention is generally illustrated in Figures 1 and 2. In these figures, reference numeral 1 designates a drum, which is rotatably supported from a frame (not shown), and is rotated by a DC servo motor 3 associated with reduction gears that is installed on a floor surface 2.

On the floor surface 2 behind the drum 1, four struts 4 are erected at the front and at the rear on the left and right sides, and between the adjacent struts 4 is mounted a horizontal support frame 4a.

Between the left and right struts 4 is disposed an elongated conveyor 6. A support shaft 7 directed in the left and right horizontal directions is fixed to brackets 6b suspended from the centre of conveyor frames 6a of the same conveyor 6. This support shaft 7 is rotatably supported by bearings 5 secured to the pair of front left and right struts 4, respectively.

Accordingly, the conveyor 6 is swingable about the support shaft 7, and the front end portion of the conveyor 6 can move up and down under the aforementioned drum 1.

On the rear struts 4 are located backward projecting brackets 4b. At the end portion of the bracket 4b is pivotably supported the lower end of a cylinder 22 directed in the vertical direction. The upper end of an upwardly projecting rod 23 of the same cylinder 22 is rotatably engaged with the lower surface of the conveyor frame 6a. Hence, the conveyor 6 can be made to swing by the extension and contraction of the rod 23 caused by driving the cylinder 22.

In the conveyor 6, a pair of front and rear rollers 10 and 11 are rotatably supported via bearings 8 and 9 provided at the front and rear ends respectively of the conveyor frame 6a, and between these rollers 10 and 11 is stretched a conveyor belt 12.

Under the conveyor belt 12 are disposed receiver rollers 14 at four locations separated by appropriate intervals. These receiver rollers 14 are rotatably mounted between brackets 14a suspended from the left and right conveyor frames 6a and prevent the conveyor belt 12 from sagging.

A D.C. servo motor 13 is fixed to the outside of the left side conveyor frame 6a and is adapted to drive a pulley 13b provided on the outside of the right side conveyor frame 6a. In conjunction with the pulley 13b pulleys 13c and 13d are provided, with the pulley 13d being fitted to the rotary shaft of the above-described roller 10. Belt 13e is stretched among the pulleys 13b, 13c and 13d (see Figure 2). Accordingly, by driving the servo motor 13, the roller 10 is rotated via the belt 13e and thereby the conveyor belt 12 can be revolved.

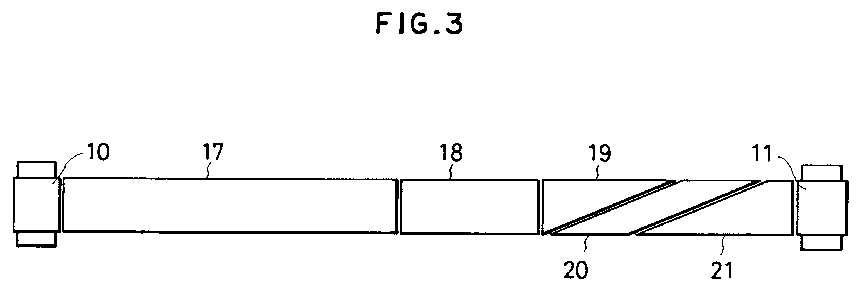

Between the upper and lower sides of conveyor belt 12 are disposed plate-shaped magnet blocks 17, 18, 19, 20 and 21 as shown in Figure 3. The magnet block 17 is in the foremost position and is rectangular and longest, and looking rearwards, the next magnet block is magnet block 18 which is rectangular and shorter. Further back are magnet blocks 19, 20 and 21 respectively, which have a rectangular shape as a whole, but in which the parallelogram-shaped magnet block 20 is disposed obliquely at the centre and the triangular magnet blocks 19 and 21 are situated in front of and behind the magnet block 20. Except for the magnet block 17, all the magnet blocks 18, 19, 20 and 21 are independently supported in a vertically movable manner.

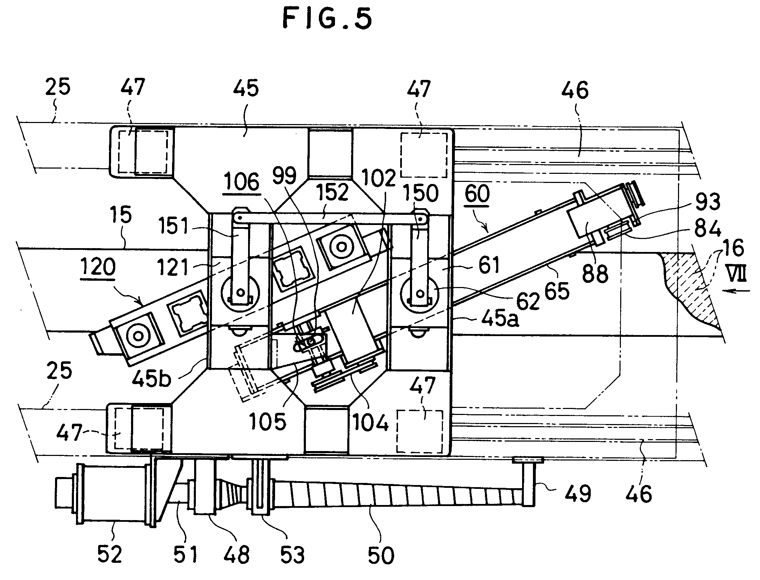

At the top of the struts 4, a pair of left and right upper frames 25 are mounted so as to slightly decline forwards and from these same upper frames 25 is suspended a left and right positioning device. Mounted between the respective upper frames 25 is a travelling support base 45 able to travel back and forth. Suspended from the same travelling support base 45 and above the conveyor belt 12 are a cutting device 60 and an attraction device 120, as shown in Figure 5.

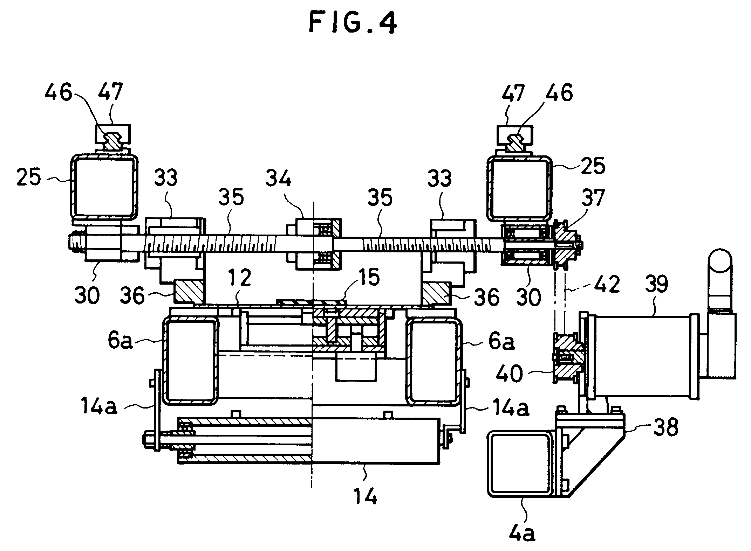

Figure 2 is a plan view of this belt-like member sticking apparatus in which the travelling support base is omitted, and Figure 4 is a cross-section view taken along line IV-IV in Figure 1. With reference to these figures, the left and right positioning device will be explained.

To the lower surfaces of both of the upper frames 25 are secured bearings 30 at left and right symmetrical positions at the rear and at the front. Between the opposing bearings 30 are mounted two guide shafts 32 in parallel to each other at the rear and the front, which penetrate and support a pair of left and right slide support members 33 which are provided in a slidable manner. A receiver member 34 is also fixedly supported at the centre.

Between and parallel to, the two guide shafts 32 is located a ball screw 35 rotatably supported by the opposing bearings 30 and the receiver member 34. This ball screw 35 penetrates through the left and right slide support members 33 and is threadedly engaged therewith.

On the left and right sides of the ball screw 35 are formed screw threads in a symmetric manner and hence, as a result of rotation of the said ball screw 35, the slide support members 33 will slide symmetrically on the left and right sides.

The above-mentioned mechanism is identical both at the rear and at the front. Between the near and front slide support members 33 are suspended centering arms 36 on the left and right sides which move symmetrically on the left and right sides in unison with the slide movement of the slide support members 33.

When the conveyor 6 has been inclined and has become parallel to the upper frames 25, the centering arms 36 are positioned close to the upper portion of the conveyor belt 12.

The above-mentioned two ball screws 35 at the rear and at the front have one end projecting from the bearings 30 to the outside where pulleys 37 are fitted and secured to these projecting ends. Belts 41 and 42 are extended between the above-mentioned pulleys 37 at the rear and at the front respectively, and another pulley 40, which is fitted and secured to a drive shaft of a servo motor 39 fixed to the above-described horizontal support frame 4a via a bracket 38 (see Figures 1 and 4).

Accordingly, as a result of driving by the servo motor 39, the rear and front ball screws 35 are rotated via the belts 42 and 41. Hence the centering arms 36 are moved symmetrically on the left and right sides simultaneously with the slide support members 33 by the rotation of the ball screws 35, and thereby the distance between the centering arms 36 is varied.

Since the centering arms 36 are close to the conveyor belt 12, they perform positioning of a belt-like member placed on the conveyor belt 12 in the left and right widthwise direction by pinching the said belt-like member from the left and the right.

Next, a description will be provided of a travelling mechanism for a travelling support base 45. On the upper surfaces of the left and right upper frames 25 are laid linear ball slide guide rails 46 in parallel to the upper frames 25. Linear ball slide guides 47 are provided at four corners on the front and rear sides and on the left and right sides of the lower surface of the travelling support base 45 and are slidably fitted to the linear ball slide guide rails 46. Hence, the travelling support base 45 is supported so as to be movable back and forth with respect to the left and right rails 46 (see Figures 2, 4 to 7).

On the outside surface of the left side upper frame 25 are located bearings 48 at the front and bearings 49 at the rear. A ball screw 50 is rotatably supported between these bearings 48 and 49. The front end of the ball screw 50 is connected to a drive shaft of a backward projecting D.C. servo motor 52 mounted on the upper frame 25 in front of the ball screw 50, via a coupling 51.

The ball screw 50 penetrates through a downwardly extended portion of a protrusion 53 which projects from the left side surface of the above-described travelling support base 45, and threadedly engages therewith.

Accordingly, when the servo motor 52 is driven, the ball screw 50 is rotated via the coupling 51, and the travelling support base 45 can be made to travel back and forth via the protrusion 53.

The travelling support base 45 is so shaped that the left and right side bodies above the linear ball slide guide rails 46 are connected by two connecting portions 45a and 45b as shown in Figure 5 (plan view). The front connecting portion 45b is located at a backwardly recessed position. An octagonal opening elongated in the left and right directions is formed between the connecting portions 45a and 45b and side walls making such shape extend upwardly around the margin of the opening from the plane in which it lies.

On the lower surface of the bottom wall are provided linear ball slide guides 47 at four corners, on the front and rear ends and on the left and right sides, and they are slidably fitted to the linear ball slide guide rails 46 below.

A cutting device 60 and an attraction device 120 are suspended from the connecting portions 45a and 45b respectively. The said connecting portions 45a and 45b connect the left and right side bodies behind and in front of the octagonal opening at the centre of the travelling support base 45.

The following description of the cutting device 60 will be made with reference to Figures 5 to 7.

At the centre of the rear connecting portion 45a of the travelling support base 45, a support plate 61 is mounted between the top ends of the front and rear side walls, and a bearing 62 is fitted and secured to corresponding circular holes drilled in the support plate 61 and a bottom wall thereunder.

The cutting device 60 is elongated in the horizontal direction and has its central portion secured to the bottom end of a support shaft 64, which is supported by the aforementioned bearing 62, penetrating it vertically. The cutting device 60 is suspended so as to be rotatable about a vertical axis in unison with the support shaft 64.

Under a horizontally elongated support frame 65 in the cutting device 60 is suspended a cylinder 71 able to travel along the support frame 65 and able to move at right angles to the said direction of travel. A disc-shaped knife 79 is rotatably supported via a pivot from a rod projecting downwards from the cylinder 71.

At one end of the support frame 65 is provided a motor 88, whose rotation is transmitted via reduction gears to a pulley 84. The cylinder 71 is made to travel by revolution of a belt extended between the pulley 84 and the cylinder 71.

It is to be noted that in the proximity of the pulley 84 is disposed an approach switch 93 which generates trigger pulses in response to rotation of the pulley 84. On the basis of these trigger pulses, a travelling position of the cylinder 71 which corresponds to the position of the knife 79 can be detected.

Also the support frame 65, which is rotatable about the support shaft 64, is inclined at an angle with respect to the conveying direction of the belt-like member as shown in Figure 5. At a position corresponding to the octagonal bore provided at the centre of the travelling support base 45 in front of the support shaft 64, a circular shaft 99 is supported from the support frame 65 so as to be movable in the left and right directions. The circular shaft 99 can be moved leftwards and rightwards via a toothed belt 104 by a servo motor 102 located next to the circular shaft 99.

Referring to Figure 5, the upwardly projecting circular shaft 99 is positioned within the octagonal bore at the centre of the travelling support base 45 and a bracket 105 projects horizontally from the bottom wall of the front connecting portion 45b of the travelling support base 45 towards the inside of the octagonal bore. The above-described circular shaft 99 is loosely fitted into an elongated circular hole 106 drilled in the bracket 105.

Accordingly, when the servo motor 102 is driven, the circular shaft 99 butts against the inner circumference of the elongated circular hole 106 and is prevented from moving, and as a result the support frame 65 is rotated about the support shaft 64 by a reaction force. In this way, a cutting angle with respect to the belt-like member can be finely adjusted.

By moving the travelling support base 45 in the forward and backward directions, the support frame 65 can be set at the cutting position. This cutting position is a position above the magnet block 20 which extends obliquely at the rear among the magnet blocks as illustrated in Figure 3. An anvil 110 which is an elongated knife receiver plate, is also obliquely mounted between the left and right conveyor frames 6a at a position above the magnet block 20 (see Figure 2). The conveyor belt moves between the magnet block 20 and the anvil 110. The anvil 110 is made of paramagnetic material or non-magnetic material.

Accordingly, the conveyor belt 12 conveys the belt-like members so that when it stops at a predetermined position, the portion of the belt-like member 15 to be cut is placed on the anvil 110, and is cut by the knife 79.

Since the belt-like member has a large number of steel cords buried therein at a predetermined bias angle, when the portion of the belt-like member 15 to be cut is placed on the anvil 110 and the magnet block 20 is raised, the magnet block 20 attracts the belt-like member 15 downwards, and thereby the belt-like member 15 can be held in position on the anvil 110. By cutting under the above-mentioned condition, the belt-like member 15 can be properly cut.

At the time of cutting, the knife 79 is lowered by driving the cylinder 71 after it has been set at a predetermined position. The knife 79 descends on a side edge portion of the belt-like member 15 held on the anvil 110 and a V-shaped knife edge bites into the belt-like member 15. When it reaches the anvil 110, the portion of the belt-like member 15 directly under the knife edge is cut.

At this moment, in the event that the steel cord 16 should be located directly under the knife edge, the knife 79 which is movable in the direction at right angles to its direction of travel, will escape in such a direction because a reaction force of a rubber portion in the vicinity of the steel cord 16 is large. Hence the knife 79 will bite in the rubber portion between the adjacent steel cords 16 and will never cut the steel cord 16.

In addition, the V-shaped knife edge will bite in while drawing in the outer surface of the belt-like member on the left and on the right, hence the steel cord is always kept coated by rubber, and as the rubber is cut when the knife edge has reached the anvil 110, the steel cord 16 will not be exposed at the cut surface.

After the knife 79 has bitten into the side edge portion of the belt-like member 15, if the knife 79 is made to travel by driving the motor 88, the knife 79 will continue to cut the rubber between the adjacent steel cords 16 along the steel cords 16. When it has reached the other side edge of the belt-like member 15, the cutting is completed.

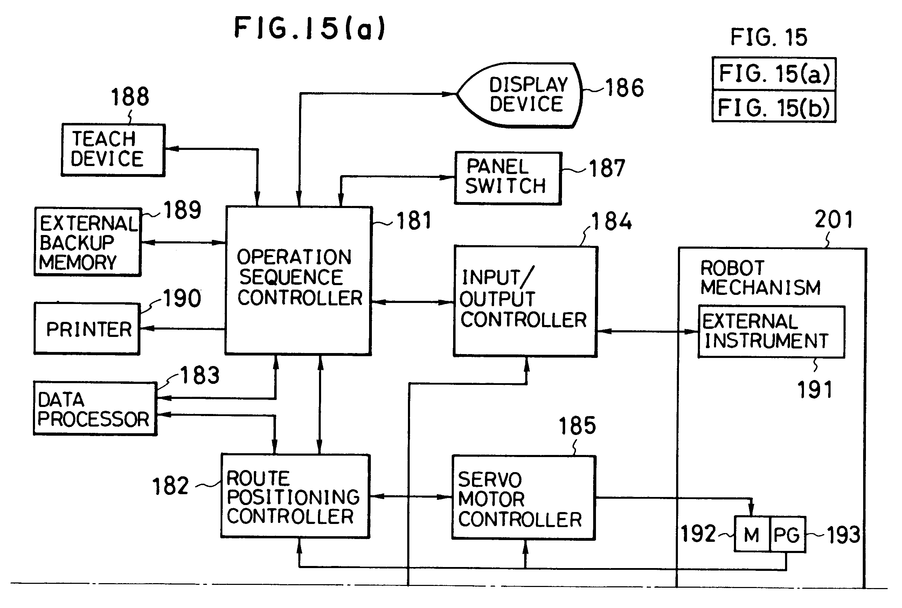

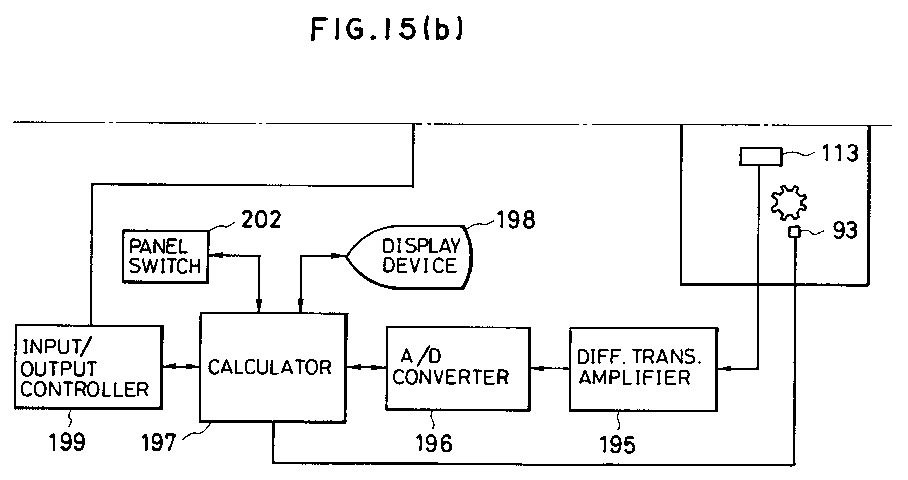

It is to be noted that the amount of deviation of the knife 79 in the direction at right angles to the direction of travel can be detected at any arbitrary time by means of a differential transformer 113 (Figure 15). Accordingly, if ever a knife 79 should deviate from a preset line of travel along which the belt-like member is to be cut, the amount of deviation would be detected by the differential transformer 113. Also, the travelling position of the knife 79 is detected by the aforementioned approach switch 93.

Since the knife 79 cuts parallel to the steel cord 16 buried in the belt-like member 15, if the steel cord 16 is curved, then the cut line will also be curved in the same shape. Since the travelling position and the amount of deviation from the preset line of travel of the knife 79 are detected moment by moment as the knife 79 travels, the shape of the cut line and the cut angle can be known.

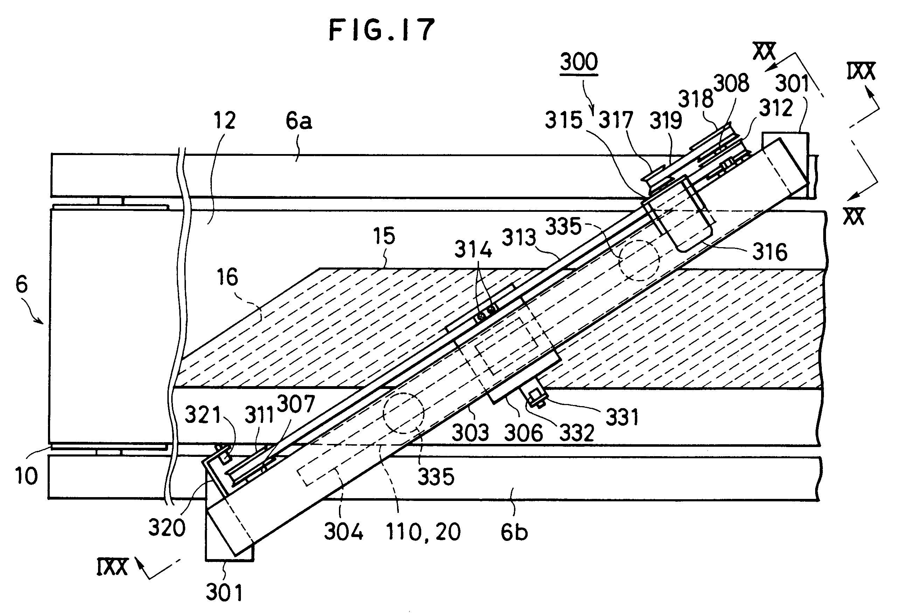

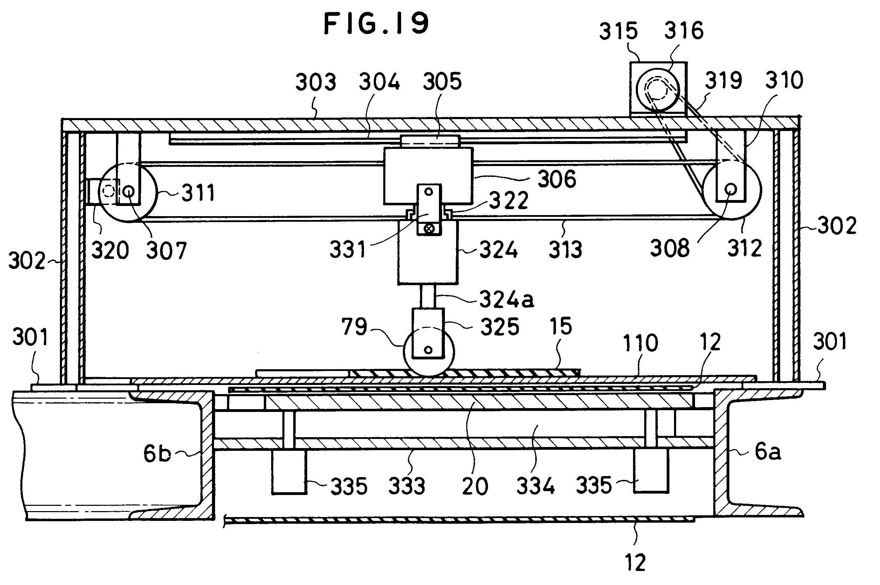

The above-described cutting device can be modified into a cutting device 300 as illustrated in Figures 17 to 20.

In the modified cutting device 300, struts 302 are erected on the left and right conveyor frames 6b and 6a, respectively, via support plates 301. Between the top ends of the respective struts 302 is mounted a horizontal support plate 303. The respective struts 302 are located at the front and rear and are displaced from each other so that the horizontal support plate 303 is inclined at an angle with respect to the direction of travel of the conveyor belt 12. This angle conforms to a standard value of the bias angle of the steel cords 16 in the belt-like member 12 to be conveyed on the conveyor belt 12.

On the lower surface of the horizontal support plate 303 is laid a linear ball slide guide rail 304 directed in the lengthwise direction of the horizontal support plate 303. A linear ball slide guide 305 is slidably fitted to this rail 304 and a travelling support member 306 is secured to the bottom surface of this linear ball slide guide 305.

Brackets 309 and 310 pivotably support rotary shafts 307 and 308 respectively. Their lower portions hang vertically downwards from the front sides of the left and right ends of the horizontal support plate 303. To the rotary shaft 307 is fitted a driven pulley 311, and to the rotary shaft 308 is fitted a drive pulley 312. Between the respective pulleys 311 and 312 is looped a toothed belt 313, and the above-mentioned travelling support member 306 is secured by screws 314 to a predetermined location on the upper side of the travelling portion of this belt 313.

On the upper surface of the horizontal support plate 303 in the proximity of the drive pulley 312 is located a motor 316 supported by a support plate 315, and to the drive shaft of this motor is fitted a pulley 317. To the rotary shaft 308 that is integral with the aforementioned drive pulley 312 is fitted a pulley 318 in juxtaposition to the drive pulley 312, and a toothed belt 319 is looped between this pulley 318 and the above-mentioned pulley 317. Accordingly driving of the motor 316 revolves the toothed belt 313 causing the travelling support member 306 to travel along the rail 304.

On the inside surface of the strut 302 on the side of the driven pulley 311, a sensor bracket 320 projects forwards at the same level as the driven pulley 311. The sensor bracket 320 is bent into an L-shape at its front end, and a reflection type optical sensor 321 is fixed on the surface opposed to the front side surface of the driven pulley 311.

Stuck onto the front side surface of the driven pulley 311 is a reflective tape on which a circle is divided into 8 equal sectors. Each alternate sector has unreflective portions, so that depending upon the angular position of the driven pulley 311 during rotation, a variable intensity of reflected light is received by the reflection type optical sensor 321.

Accordingly, when the driven pulley 311 rotates as a result of travelling of the travelling support member 306 caused by revolution of the toothed belt 313, the reflection type optical sensor 321 detects the rotary state of the driven pulley 311, and by counting the number of variations of the detected value, the travelling position of the travelling support member 306 can be derived.

A rail 323 for a ball slide table 322 is provided on the bottom surface of the travelling support member 306, positioned at right angles to the travelling direction. A cylinder 324 is secured to the bottom surface of the ball slide table 322 which is slidably fitted to the rail 323. The cylinder 324 is suspended under the travelling support member 306, and can slide along the rail 323 in a direction at right angles to the direction of movement of the travelling support member 306.

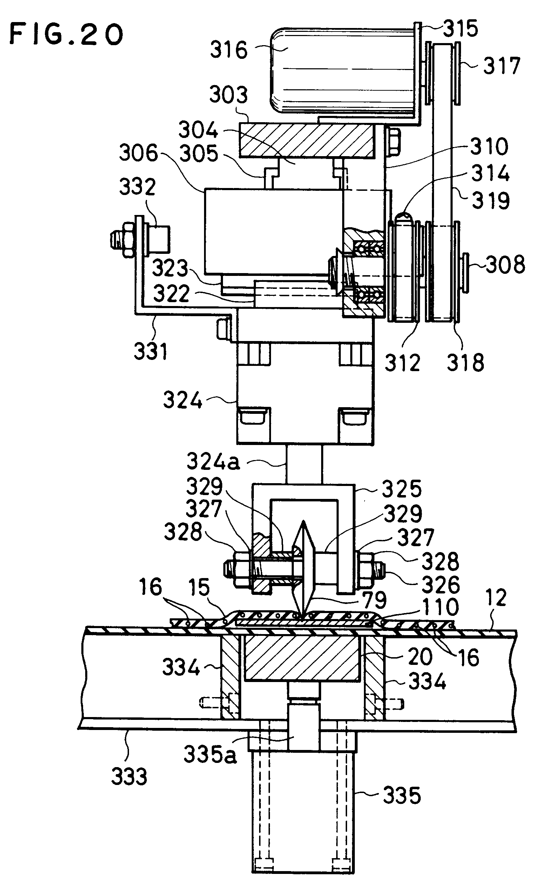

At the bottom end of a downwardly projecting cylinder rod 324a of the cylinder 324, is secured a knife bracket 325 with a U-shaped cross-section. As shown in Figure 20, a bolt 326 penetrates horizontally through the left and right sides of the knife bracket 325, and is secured to the knife bracket 325 by means of washers 327 and nuts 328 at the opposing ends. A disc-shaped knife 79 is rotatably supported at the centre of the bolt 326 by left and right spacers 329.

The knife 79, rotatably supported from the knife bracket 325 in the above-described manner, rises and falls in accordance with contraction and extension of the cylinder rod 324a. In addition, this knife 79 can move in the direction of travel of the travelling support member 306, and also can move in the direction at right angles to the above-mentioned direction of travel.

A sensor bracket 331 projects backwards from the rear side surface of the cylinder 324. The rear end of this bracket 331 is bent upwards so as to be opposed to the rear side surface of the travelling support member 306. An optical distance sensor 332 is mounted to the rear portion so as to be opposed to the support member 306. Accordingly, the distance sensor 332 moves with the cylinder 324 at right angles to the travelling direction of the support member 306, and can detect the distance from the travelling support member 306 at any arbitrary time.

Hence the above-described reflection type optical sensor 321 detects the position of the knife 79 in the direction of travel, while the distance sensor 332 detects the position of the knife 79 in the direction at right angles to the travelling direction. The detection signals issued from the reflection type optical sensor 321 and the distance sensor 332 are digitized, and the configuration of the cut surface is hence known and can be stored in the form of coordinate values.

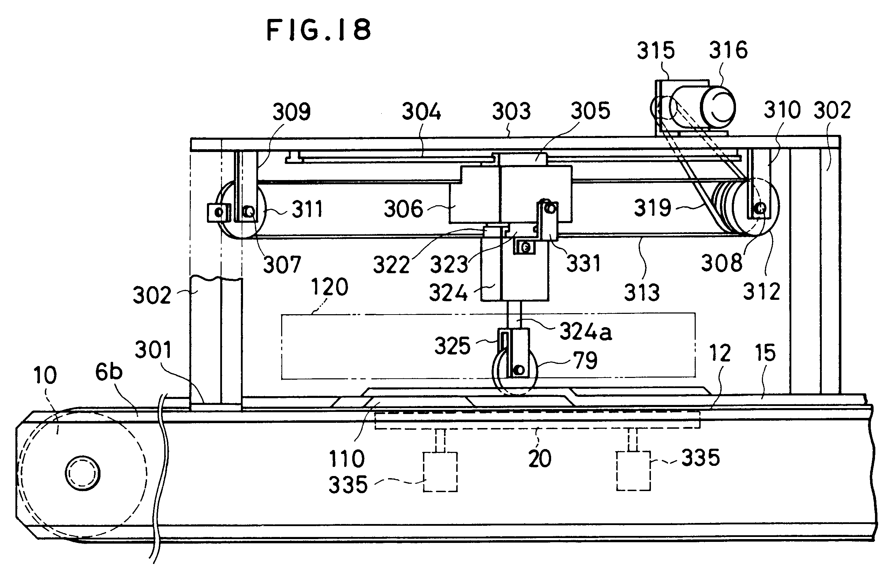

The anvil 110 described previously with reference to Figure 2, is disposed under the horizontal support plate 303 in parallel thereto (Figures 18, 19 and 20). This anvil 110 is made of non-magnetic hard stainless steel, for instance, stainless steel having a hardness of Hv 400 or higher which is difficult to scratch. As described previously, the anvil 110 is mounted above and close to the conveyor belt 12 so as to obliquely traverse the belt 12. The belt-like member 15 having been conveyed to the anvil 110 by the conveyor belt 12 is further conveyed to cover the anvil 110.

Under the conveyor belt 12 is located the previously described magnet block 20 of parallelogram shape which is able to move vertically at the position opposed to the anvil 110. In addition, a support plate 333 is mounted between the left and right frames 6b and 6a and on this support plate 333 guide plates 334 are erected along the front and rear side edges respectively of the magnet block 20. The top ends of the guide plates 334 are located close to the lower surface of the conveyor belt 12.

Two cylinders 335 are fixed to the lower surface of the support plate 333, their cylinder rods 335a projecting upwards and penetrating through circular holes in the support plate 333. These cylinder rods 335a are secured in predetermined positions on the lower surface of the magnet block 20. When the cylinder rods 335a are extended by driving the cylinders 335, the magnet block 20 will be raised along the plate 334. At the fully raised position, the upper surface of the magnet block 20 comes close to the lower surface of the conveyor belt 12.

In the case where the magnet block 20 is in the raised position, the belt-like member 15 on the anvil 110 is held in tight contact with the said anvil 110. Its configuration is maintained because the steel cords 16 buried within the belt-like member 15 are attracted downwards by the magnetic force of the magnet block 20. Under this condition, cutting by means of the knife 79 is carried out. The cutting is effected in a similar manner to the case of the previously described cutting device 60.

When the magnet block 20 is in the lowered position, the belt-like member 15 on the anvil 110 is not subjected to the influence of the magnetic force of the magnet block 20. Since the anvil 110 itself is made of non-magnetic material and not magnetized, the belt-like member 15 can move freely, allowing the conveying to be performed easily.

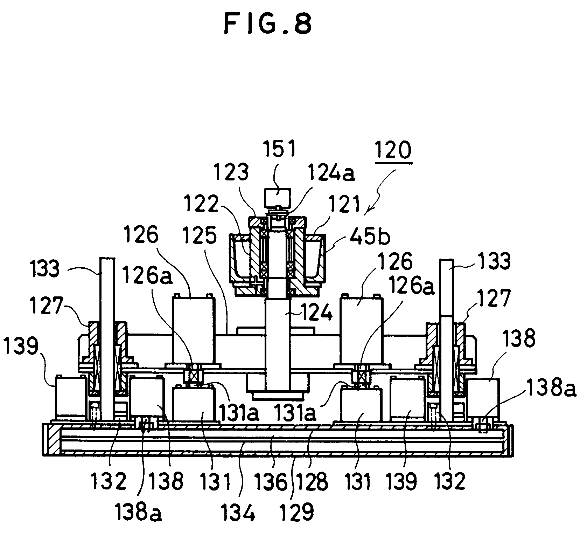

A description will next be made of an attraction device, also suspended from the travelling support base 45, with reference to Figures 8 to 10.

Support plate 121 is mounted at the centre of the front connecting portion 45b of the travelling support base 45, between the top ends of the front and rear walls. A bearing 122 is fitted and secured to corresponding circular holes drilled in the support plate 121 and the bottom wall under the support plate 121.

A support shaft 124 penetrates vertically through the bearing 122 and is rotatably fitted to the bearing 122 and a washer 123 above the bearing 122. The support shaft 124 is supported from the bearing 122 by means of a nut 124a threadedly mated with a screw portion at the upper part of the support shaft 124.

At the bottom portion of the support shaft 124 is secured and supported a support frame 125 that is elongated in the horizontal direction and is U-shaped in cross-section at its central portion. The support frame 125 is suspended in a horizontally rotatable manner about the support shaft 124.

To the support frame 125 are secured cylinders 126 on the opposite sides of the support shaft 124. Bearings 127 are secured to the support frame 125 on the left and right end portions thereof.

In parallel to, and under the support frame 125 is positioned an elongated rectangular horizontal support plate 128. Onto the lower surface of this horizontal support plate 128 are secured two rectangular pipes 129 and 130 held in contact with each other. The upwardly projecting rods 131a of a pair of left and right cylinders 131 are fixed to the upper surface of the horizontal support plate 128 supporting the rectangular pipes 129 and 130. The downwardly projecting rods 126a of the cylinders 126 are fixed to the upper surface of the above-described support frame 125 and are coaxially coupled. The horizontal support plate 128 and the rectangular pipes 129 and 130 are hence suspended via the rods 126a and 131a.

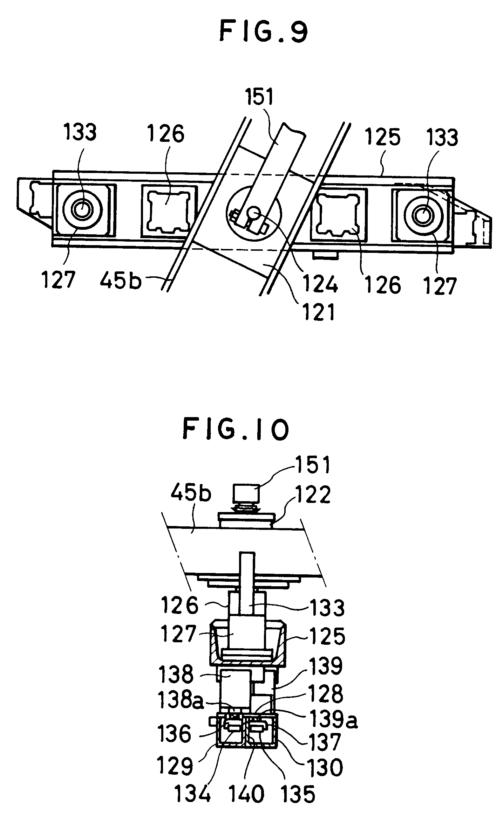

At positions further displaced to the left and to the right of the cylinders 131 on the horizontal support plate 128, are located guide shafts 133. These guide shafts 133 project upwards and have their lower ends fixed, and slidably and vertically penetrate through the bearings 123 on the side of the above-mentioned support frames 125 (see Figure 10).

Accordingly, the extending and contracting of the cylinder rods 126a and 131a, as a result of driving of the cylinders 126 and 131, allows the rectangular pipes 129 and 130 to be lowered and raised guided by the guide shafts 133.

Within the rectangular pipes 129 and 130 are contained elongated permanent magnets 134 and 135 respectively, gripped from above by holders 136 and 137. The holder 136 is secured to the lower ends of rods 138a projecting downwards from a pair of left and right cylinders 138, into the front side rectangular pipe 129. The cylinders 138 are fixed on the horizontal support plate 128, and so, when the rods 138a extend and contract as a result of driving of the cylinders 138, the permanent magnet 134 is lowered and raised within the rectangular pipe 129.

Likewise, the holder 137 is secured to the lower ends of rods 139a projecting downwards into the rear side rectangular pipe 130. Hence, when the rods 139a extend and contract as a result of driving of the cylinders 139, the permanent magnet 135 is lowered and raised within the rectangular pipe 130.

The attraction device 120 has the above-mentioned construction, and the main body suspended via the support shaft 124 can rotate about the support shaft 124. As a result of driving the cylinders 126 and 131, the rectangular pipes 129 and 130 can be raised and lowered. The permanent magnets 134 and 135 within the rectangular pipes 129 and 130 respectively, can be separately and independently raised and lowered by driving the cylinders 138 and 139, respectively.

Accordingly, after the belt-like member 15 has been cut, and if the mutual joining surface of the rectangular pipes 129 and 130 is positioned along the vertical plane aligned with the cutting surface, the lower surfaces of the rectangular pipes 129 and 130 are made to butt against the upper surfaces of the end portions of the belt-like member 15 before and behind the cutting surface. By lowering the rectangular pipes 129 and 130, and the permanent magnets 134 and 135 within the rectangular pipes 129 and 130 respectively, the end portions of the belt-like member 15 before and behind the cutting surface are attracted to the lower surfaces of the rectangular pipes 129 and 130 respectively. They are raised upwards simultaneously by elevation of the rectangular pipes 129 and 130.

At this moment, if attraction of only one of the end portions of the belt-like member 15 before or behind the cutting surface, is desired it is necessary to lower only one of the magnets.

It is to be noted that when release of the attracting action is desired, the magnet can be raised, and the corresponding end portion of the belt-like member 15 will be separated from the lower surface of the rectangular pipe.

The above-described attraction device 120 and the above-described cutting device 60 are both suspended from the travelling support base 45, and as shown in Figure 5, can rotate while always remaining parallel to each other.

More particularly, the support shafts 64 and 124 of the cutting device 60 and the attraction device 120, respectively, upwardly penetrate the bearings 62 and 122 fixed to the travelling support base 45. At the top ends of these support shafts are provided rotary arms 150 and 151 respectively, situated horizontally and parallel to each other, with their end portions fitted and secured to the support shafts. Between the free end portions of the rotary arms 150 and 151 is mounted a connecting rod 152, and the opposite ends of the said connecting rod 152 are pivotably engaged with the rotary arms 150 and 151.

Accordingly, when the cutting device 60 is rotated by driving the servo motor 102 as described above, rotation of the support shaft 64 causes the support shaft 124 to rotate via the rotary arm 150, the connecting rod 152 and the rotary arm 151. Thus the attraction device 120 can be rotated at the same speed, and both the cutting device 60 and the attraction device always maintain their parallel condition.

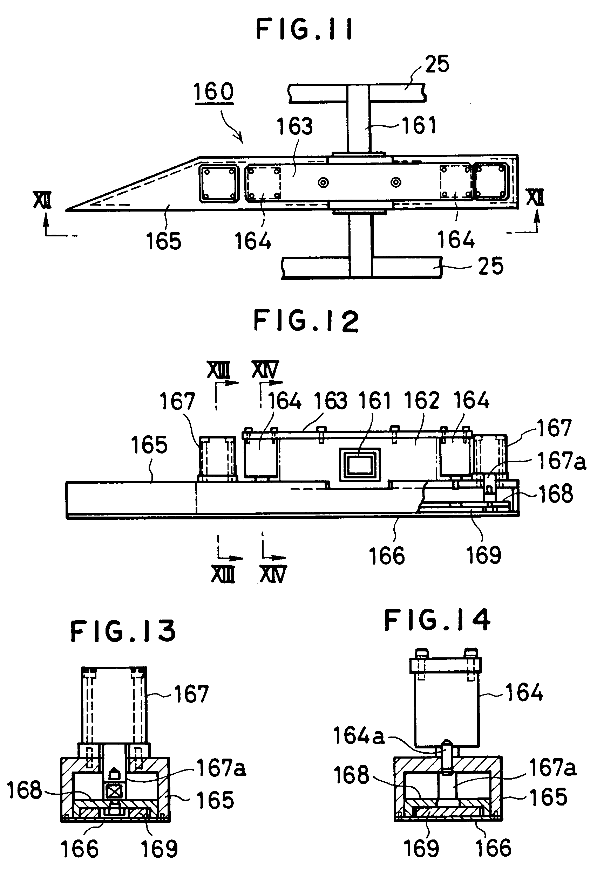

A description will next be made of an attraction hand 160 provided above the rear end of the conveyor belt 12 (see Figure 2) with reference to Figures 11 to 14.

A horizontal support frame 161 consisting of a tubular body with a rectangular cross-section is mounted between the above described left and right upper frames 15. A frame 162 is suspended in the front and rear directions and is supported at the centre between the left and right upper frames 25 by being penetrated by the horizontal support frame 161.

On the top surface of the frame 162 extends a support plate 163. A pair of cylinders 164 are secured to the lower surface of the opposite ends of the support plate 163 projecting backwards and forwards from the frame 162. To the lower ends of rods 164a projecting downwards from the cylinders 164, is secured and suspended a casing 165 with a U-shaped cross-section which is elongated in the front and rear directions.

The casing 165 is formed into a wedge shape by having its front end cut obliquely. A non-magnetic steel plate 166 is extended below the casing 165 so as to close its downward-directed opening.

At the front and at the rear of the upper surface of the casing 165 are secured a pair of cylinders 167. Rods 167a of these cylinders 167 penetrate the upper wall of the casing 165 thus projecting down into the casing 165.

A magnet 169 is contained within the casing and is gripped by a holder 168. This holder 168 is secured to the ends of the rods 167a of the above-described cylinders 167 and is hence suspended in a vertically movable manner within the casing 165.

The holder 168 is loosely fitted within the inner contour of the casing 165. The magnet 169 gripped by the holder 168 is a flat plate elongated in the front and rear directions, whose front end is cut obliquely into a wedge shape.

The attraction hand 160 is constructed in the above-described manner. The casing 165 is raised and lowered by driving the cylinders 164, and by driving the cylinders 167 placed on the casing 165, the magnet 169 is raised and lowered within the casing 165.

Accordingly, when the belt-like member 15 on the conveyor belt 12 is to be attracted, the casing 165 is lowered onto the belt-like member 15 by extending the rods 164a of the cylinder 164. If the magnet 169 is subsequently lowered by extending the rods 167a of the cylinders 167, the magnet 169 attracts the belt-like member 15 to the steel plate 166.

Under this condition the belt-like member is attracted, and if the rods 164a are contracted the said belt-like member 15 rises and separates from the conveyor belt 12.

When the belt-like member 15 is to be placed on the conveyor belt 12, the casing 165 is lowered and the magnet 169 is raised, thus the belt-like member 15 is lowered onto the conveyor belt 12 and the attraction effect is released. Now, raising of the casing 165 will leave the belt-like member 15 on the conveyor 12.

The above-mentioned is a description of the structure of the sticking apparatus for a belt-like member according to the present invention, and now description will be presented of a drive control system for such apparatus on the basis of the schematic block diagram illustrated in Figure 15 (a) and (b).

In Figure 15(a) reference numeral 181 designates an operation sequence controller which stores position information and the like, in a predetermined operation program. The program stored in this operation sequence controller 181 is produced, for instance, by manipulating a panel switch 187, and viewing on a display device 186 for confirmation of information. Position information stored in the operation sequence controller 181 according to instructions received from an "teach" device 188.

Position information reproduced from the aforementioned operation sequence controller 181 according to an operation program is sent to a data processor 183. In this data processor 183 a rotational speed and the amount of rotation of the servo motor 192 are calculated on the basis of various parameters which were preliminarily stored.

It is to be noted that in the event that the calculated results should exceed a preliminarily stored speed limit and amount of rotation limit, an alarm signal is sent to the operation sequence controller 181, and as a result the overall operation is stopped.

If the above-mentioned calculation results are sent from the data processor 183 to a route positioning controller 182, the route positioning controller 182 drives a servo motor controller 185.

The servo motor 192 involves six motors in total, consisting of the above-described servo motors 3, 13, 39, 52, 88 and 102 allotted for the respective uses.

In response to rotation of the servo motor 192, pulse signals are sent from a pulse generator 193 to the servo motor controller 185 and to the route positioning controller 182, and a well-known servo control is effected.

Reference numeral 184 designates an input/output controller, which transmits signals sent from an external instrument 191 to the operation sequence controller 181. This input/output controller 184 also transmits a control signal issued from the operation sequence controller 181 to the external instrument 191 to control the external instrument 191.

In addition, an external backup memory 189 can register or read out preservation programs in cooperation with the operation sequence controller 181.

Reference numeral 190 designates a printer for printing a program which is preserved and stored in the external backup memory 189 and the operation sequence controller 181.

As described previously, the differential transformer 113 detects an amount of deviation of a cutter from a predetermined line of travelling, which may occur during cutting when the belt-like member is cut by the cutting device 60.

A differential transformer amplifier 195 amplifies a minute output voltage of the differential transformer 113 up to a high voltage.

An A/D converter 196 converts an output voltage from the differential transformer amplifier 195 to a digital output.

Trigger pulses issued from the approach switch 93 are used as timing signals for inputting the data sent from the A/D converter 196 to a calculator 197.

The calculator 197 takes in the digital input sent from the A/D converter 196 in response to the timing signals consisting of the trigger pulses. It then arithmetically processes this digital input, and, specifically, calculates an amount of correction for an angle and an amount of correction for a length.

A display device 198 displays the results of such a calculation.

A panel switch 202 is used to start and stop the calculator 197 and to stop formation of a program.

An input/output controller 199 performs signal level matching for transferring the results of calculation by the calculator 197 to the operation sequence controller 181.

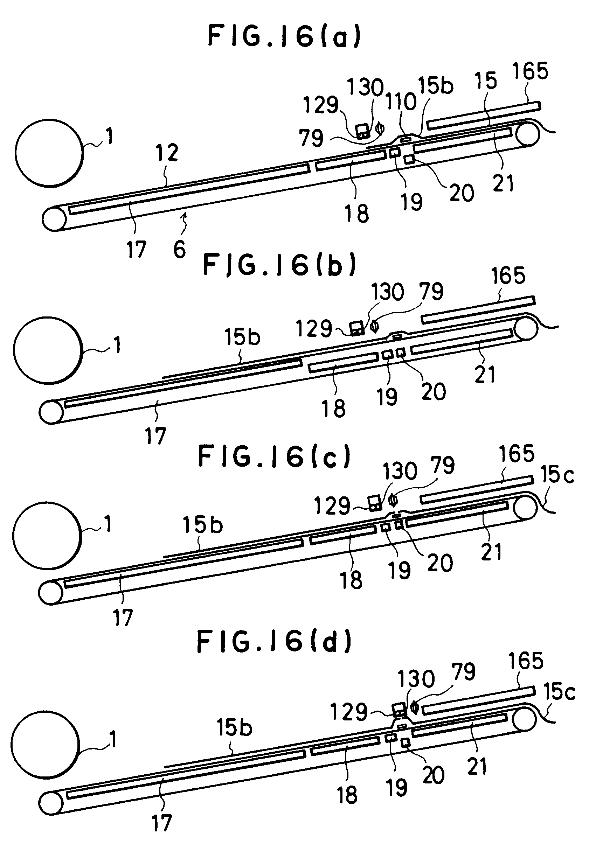

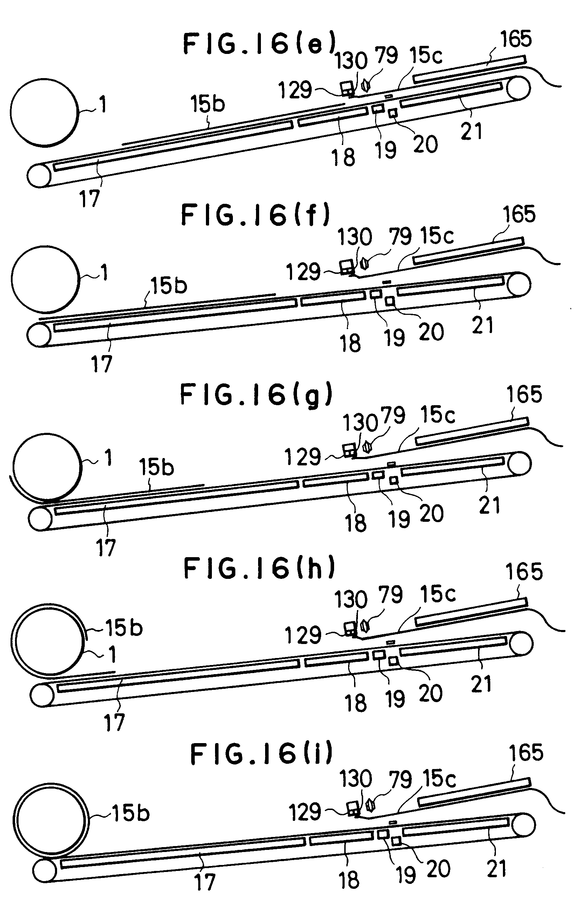

A series of operation procedures controlled by the control system as described above will be explained sequentially in the following with reference to Figures 16(a) to 16(i). Reference numerals not shown therein but mentioned in the text which follows refer to features already described in detail therein.

Figures 16(a) to 16(i) illustrate the successive steps of the operation of cutting out a belt-like member from a raw material, and wrapping it around and sticking it to a cylindrical drum. In the respective figures there are shown a drum 1, a conveyor belt 12, magnet blocks 17, 18, 19, 20 and 21 disposed within a conveyor 6 in a vertically movable manner, an anvil 110 provided above the magnet block 20 with the conveyor belt 12 interposed therebetween, rectangular pipes 129 and 130 (containing magnets 134 and 135 therein) and a knife 79 included in a cutting device 60 and an attraction device 120 suspended from a travelling support base, a casing 165 (containing a magnet 169 therein) of an attraction hand 160, and a belt-like member 15.

Firstly, the belt-like member 15 is carried onto the conveyor belt 12 from the rear of the conveyor 6. The conveyor belt 12 is revolved by driving of the servo motor 13, and the belt-like member 15 is fed in up to the position where the tip end of the belt-like member 15 goes over the anvil 110.

The cutting device 60 is moved by driving of the servo motor 52 until the knife 79 comes to the cutting position. It is rotated by driving of the servo motor 102 in to the predetermined cutting angle to be ready for cutting the belt-like member.

The belt-like member 15 is freed from the conveyor belt 12 by lowering the magnet blocks 18, 19, 20 and 21 under the conveyor belt 12. The servo motor 39 is driven to position the belt-like member 15 in the lateral direction by pinching the belt-like member 15 from the left and the right with the centering arms 36. The positioned belt-like member 15 is then attracted to the conveyor belt 12 and the anvil 110, by raising the magnet blocks 18, 19, 20 and 21, and opening the centering arms 36.

Next, the knife 79, in the cutting device 60 driven by the motor 88, is positioned at the start position on one side edge of the belt-like member 15. The knife 79 is then lowered by driving the cylinder 71, and the belt-like member 15 is cut by making the knife 79 travel along a predetermined line of travel driven by the motor 88.

During the cutting operation, signals detected by the approach switch 93 and the differential transformer 113 are sent to the route positioning controller 182, where a cut configuration, an amount of angle correction, and an amount of length correction and the like, are calculated and sent to the operation sequence controller 181, in which they are stored.

After the cut-out end portion of the belt-like member 15 has been removed, and if the belt-like member 15 is made to advance by a distance of 1₁, the state shown in Figure 16(a) is realised. This condition is a start condition of a series of cycle operations to be repeated subsequently.

At first, the magnet blocks 18, 19, 20 and 21 are lowered and the centering arms 36 are closed up to a preset width to perform lateral positioning of a belt-like member 15b. The magnet blocks 18, 19, 20 and 21 are then raised, and the centering arms 36 are opened.

The belt conveyor 12 is revolved to make the belt-like member 15b advance by a predetermined length 1₂.

Then, lateral positioning is effected again, and the belt-like member 15b is made to advance by a predetermined length 1₃ by revolving the conveyor belt 12.

The above-mentioned total distance 1₁ + 1₂ + 1₃ over which the belt-like member 15b has advanced after cutting of the leading end of the belt-like member 15b, is equal to the circumferential length L of the drum.

Again, lateral positioning is carried out (Figure 16(b)), subsequently the cutting device 60 is moved to the cutting position, and the inclination angle of the cutting device 60 is set at the process angle.

With regard to the above-mentioned setting of the angle, upon initial setting after the preparatory operation, the setting operation is unnecessary because the cutting device 60 is already set at the process angle, but after the subsequent repeated operations are started, it becomes necessary.

Subsequently, all the magnet blocks 18, 19, 20 and 21, including the magnet block 20 under the anvil 110, are raised to attract and hold the belt-like member 15b, the belt-like member 15b is cut by the knife 79, and the knife 79 is raised (Figure 16(c)).

Then, the rectangular pipes 129 and 130 are withdrawn to align their joining surface 140 (Figure 10) with the predetermined line of travel of the knife 79. The end portions of the belt-like members 15b and 15c, before and behind the cut surface respectively, are raised by the attraction device 120 (Figure 16(d)). Both the conveyor belt 12 and the attraction device 120 are made to advance at the same speed by the distance 1₁, so that the leading end of the rear belt-like member 15c may go over the anvil 110.

At this moment, the rectangular pipe 129 attracting the trailing end of the belt-like member 15b cut to a desired length, is rotated by driving the servo motor 102 by the amount of correction of the angle which was derived through calculation after cutting. Thereby correction for matching the trailing end of the belt-like member 15b with the angle of the leading end, is effected.

Under such conditions, the rectangular pipes 129 and 130 are lowered, only the permanent magnet within the rectangular pipe 129 is raised, and hence the trailing end of the belt-like member 15b is made to be attracted to the conveyor belt 12. Then, if the rectangular pipes 129 and 130 are raised, the leading end of the rear belt-like member 15c is raised because it remains attracted to the rectangular pipe 130.

The trailing end of the belt-like member 15b at the front can be attracted to and held on to the side of the conveyor belt 12 while maintaining its configuration corrected by the rotation of the rectangular pipe 129 and conformed to the cut angle of the leading end, since the magnetic force of the permanent magnet 134 is larger than that of the magnet blocks 17, 18.

Subsequently, the rear belt-like member 15c is attracted to the casing 165 by the attraction hand 160 and thereby raised (Figure 16(e)). The cut belt-like member 15b is conveyed forwards by revolving the conveyor 12, and the leading end of the belt-like member 15b is positioned at a sticking position under the drum 1.

Since the belt-like member 12b is attracted to and held on the conveyor belt 12 by the magnet blocks 17, 18, and 19 even during its conveyance, the shapes of the leading and trailing ends can be maintained.

Next, the conveyor 6 is made to swing by driving the cylinder 22, thereby raising the front end of the conveyor 6 and causing the leading end of the belt-like member 15b to be pinched by the outer circumferential surface of the drum 1 and the conveyor belt 12 (Figure 16(f)).

Within the drum 1 is contained a permanent magnet (not shown). By means of this permanent magnet, the leading end of the belt-like member 15b is attracted to the outer circumferential surface of the drum 1.

The drum 1 and the conveyor belt 12 are driven while equalizing the circumferential speed of the drum 1 and the linear conveying speed of the conveyor belt by synchronising the servo motor 3 and the servo motor 13. Thereby, the triangular portion at the leading end of the belt-like member 15b is wrapped around the drum 1 (Figure 16(g)).

Subsequently, the central portion of the belt-like member 15b not including the triangular portions at the leading and trailing ends, is wrapped around the drum 1 by controlling the relative speeds of the drum 1 and the conveyor belt 12 (Figure 16(h)).

This control is executed on the basis of the amount of correction for a length which was calculated at the time of the above-described cutting. The drum 1 is made to have a somewhat faster speed so that the belt-like member 15b tends to be stretched, and control is effected in such manner that the interval between the steel cords 16 buried within the belt-like member 15b may have a predetermined dimension.

The triangular portion at the trailing end of the belt-like member 15b is wrapped around the drum 1 by driving the drum 1 and the conveyor belt 12 at the same speed (Figure 16(i)).

The belt-like member 15b wrapped around the circumference of the drum 1 in the above-described manner has its opposite end portions properly aligned. There is no risk that stepped misalignment may occur, not to mention overlap or separation of the end portions, because the trailing end angle of the belt-like member is corrected so as to conform to the leading end angle and the length is also adjusted.

In addition, the interval between the steel cords 16 within the belt-like member 15b also falls in a predetermined range, and so the end portions can be properly joined.

Next, by driving the cylinder 22, the conveyor 6 is made to swing and is returned to its original inclination angle. The belt-like member 15b stuck to the drum 1 has its end portions joined together, and is then removed.

Then the rectangular pipes 129 and 130 which are held at the state where they corrected the trailing end angle of the belt-like member 15b, are returned again to the original process angle by driving the servo motor 102. The next belt-like member 15c which has been attracted and raised by the rectangular pipe 130 and the casing 165 is then transferred to the conveyor belt 12.

This condition is the same condition as that shown in Figure 16(a), and subsequently, the steps of the process shown in Figures 16(a) to 16(i) are repeated.

As described in detail above, according to the present invention, the inclination angle of the cut line at the leading end of the belt-like member is measured at the time of cutting. The inclination angle of the cut line at the trailing end is measured at the time of cutting, and by comparing the inclination angle of the cut line at the trailing end with the inclination angle at the leading end, an amount of correction for the inclination angle is calculated. After cutting, the trailing end portion is corrected on the basis of the above-mentioned amount of correction for the inclination angle, so as to conform to the leading end angle, by rotating an attraction device which attracts and holds the trailing end portion. The belt-like member is wrapped around a drum while maintaining the corrected condition and the end portions are joined together. Therefore, the leading end and the trailing end coincide properly, and proper joining, not associated with stepped deviation, can be realised.

In the method according to the present invention, since a trailing end angle of a belt-like member is corrected so as to conform to a leading end angle and the belt-like member is stuck to the drum while maintaining the corrected condition, the leading end surface and the trailing end surface align with each other and joining can be achieved properly.

Furthermore, with the apparatus according to the present invention, since the leading end cut angle of a belt-like member is measured by measuring means, then, after cutting of the trailing end, the trailing end surface of the belt-like member can be aligned with the leading end surface by changing the attitude of a means for holding the trailing end by correction means on the basis of the measured cut angle. The corrected trailing end surface is maintained in shape and stuck to a cylindrical drum by attraction means and holding means. Therefore, the leading end and the trailing end can be always made to coincide properly. Inconveniences such as stepped deviation will not occur, and improvements in quality can be realised.

Still further, it is possible for the entire apparatus to be compact, and reduction of an installation cost can be achieved.

## Claims

1. A method for aligning a belt-like member (15b) on a cylindrical drum (1), wherein the belt-like member (15b) is prepared by cutting raw material (15) for the belt-like member at two locations, is conveyed by a conveyor (12) and is wrapped around and stuck to the drum (1), comprising the steps of:
(i) making a first inclined cut across said raw material (15) to form a leading end edge of the belt-like member (15b) and measuring the inclination angle of said first cut on said raw material (15);
(ii) conveying said raw material (15) a first predetermined distance;
(iii) making a second inclined cut across the raw material (15) at a similar angle to said first cut to form a trailing end edge of the belt-like member (15) and measuring the inclination angle of said second cut on said raw material (15);
(iv) conveying the belt-like member (15b) a second predetermined distance and adjusting the attitude of the trailing end portion of the belt-like member (15b) on the basis of the measured inclination angles of the respective cuts, so that the trailing end edge is parallel to the leading end edge; and
(v) conveying the belt-like member (15b) in this corrected configuration and wrapping it around said cylindrical drum (1), with said leading and trailing end edges coinciding, by rotating the drum (1),
**characterised in that**, in steps (i) and (iii), said raw material (15) is cut on cutting support means (110) whilst being fixedly attracted to said conveyor (12) and said cutting support means (110), **in that**, in steps (ii) and (iv), the leading and trailing end edges, respectively, are lifted away from and conveyed over said cutting support means (110) by holding means (120) and are then fixedly attracted to the conveyor (12) and conveyed said first and second predetermined distances, respectively, by said conveyor (12), **and in that** the raw material (15) for the belt-like member that has not been cut is separated from the conveyor (12) when the belt-like member (15b) is being wrapped around the drum (1).

2. A method for aligning a belt-like member (15b) as claimed in claim 1, characterised in that the raw material (15) for the belt-like member (15b) is cut by means of a knife (79) moving along a prearranged travelling line after the raw material (15) to be cut is fixedly attracted to said cutting support means (110) over its entire width, and in that the inclination angles of said first and second cuts are measured by detecting the amount of deviation of said knife (79) from said prearranged travelling line and the position of said knife (79) along said prearranged travelling line.

3. A method for aligning a belt-like member (15b) as claimed in claim 1 or claim 2, characterised in that the attitude of the trailing end portion is adjusted by: comparing the inclination angles of the first and second cuts on said raw material (15) to obtain the angle of deviation of the trailing end edge from the leading end edge; holding the trailing end edge of the belt-like member (15b) and the leading end edge of the subsequent raw material (15) either side of the line of cut and simultaneously separating them from the cutting support means (110) and the conveyor belt (12); and changing the holding attitude of said trailing end portion by the same angle as said angle of deviation.

4. A method for aligning a belt-like member (15b) as claimed in claim 1, 2 or 3, characterised in that the belt-like member (15b) is fixedly attracted towards the conveyor belt (12) by moving a plurality of magnets (18,19,20,21) disposed under said conveyor belt (12) selectively towards said conveyor belt (12) and is separated from said conveyor belt (12) by moving said magnets (18,19,20,21) selectively away from said conveyor belt (12).

5. A method for aligning a belt-like member (15b) as claimed in any preceding claim, characterised in that the raw material (15) is cut on cutting support means which is an anvil (110) made of paramagnetic or non-magnetic material, the belt-like member (15b) being fixedly attracted towards said anvil (110) by moving a magnet (20) close to said anvil (110), and separated from said anvil (110) by moving said magnet (20) away from said conveyor belt (12).

6. A method for aligning a belt-like member (15b) as claimed in any preceding claim, characterised in that the belt-like member (15b) is wrapped around and stuck to said cylindrical drum (1) by: contacting and sticking the front tip of the belt-like member (15b), which is fixedly attracted to the conveyor belt, to the cylindrical drum (1); wrapping said belt-like member (15b) around said drum (1) while equalising the circumferential speed of said drum (1) and the linear conveying speed of said conveyor belt (12); abutting said front tip and the rear tip of said belt-like member (15b); and joining said front and rear tips to each other without overlap or separation.

7. Apparatus for aligning a belt-like member (15b) on a cylindrical drum (1), wherein the belt-like member (15b) is prepared by cutting raw material (15) for the belt-like member at two locations, is conveyed by a conveyor (12) and is wrapped around and stuck to the drum (1), comprising:
a conveyor (12) for conveying said raw material (15);
cutting means (60) for making first and second inclined cuts across said raw material (15) to form leading and trailing end edges of the belt-like member (15b);
holding means (120) for holding adjacent end portions of the belt-like member (15b) and raw material (15) independently either side of the line of cut while maintaining the configurations of the end portions;
measuring means (93,113,182) for measuring the inclination angle of said first and second cuts on said raw material (15); and
correction means (102) for correcting the inclination angle of the trailing end edge of the belt-like member (15b) by changing the attitude of said holding means (120) to conform the trailing end edge to attitude parameters assumed by the leading end edge and measured by said measuring means (93,113,182),
**characterised in that** the apparatus further comprises separating means for separating from the conveyor means the raw material (15) for the belt-like member that has not yet been cut, cutting support means (110) and means for fixedly attracting the raw material (15) to the cutting support means (110) and the conveyor (12), said raw material (15) being cut whilst being fixedly attracted to said conveyor (12) and said cutting support means (110), **and in that** said holding means (120) is arranged to lift away from and convey over said cutting support means (110) the leading and trailing end edges.

8. Apparatus as claimed in claim 7 for use with a raw material (15) for the belt-like member (15b) which is formed of rubber reinforced with steel cords (16), in which apparatus (a) said cutting means (60) comprises a circular disc-shaped knife (79) adapted to travel over and cut said raw material (15) substantially parallel to the steel cords (16), (b) said cutting support means comprises an anvil (110), made of paramagnetic or non-magnetic material, which is disposed to be below the raw material (15) for the belt-like member (15b) to receive the edge of said knife, and (c) said means for fixedly attracting the raw material (15) to the cutting support means (110) and the conveyor (12) comprises magnets (17,18,19,20,21), disposed below said anvil (110) and said conveyor (12), which draw said raw material (15) onto said anvil (110) and said conveyor (12) or release it therefrom, depending on their position.

9. Apparatus as claimed in claim 8, wherein said holding means (120) includes magnets (134,135) which are vertically displaceable above said conveyor (12), the attractive force of the magnets (134,135) of said holding means (120) being larger than the attractive force of the magnets (17,18,19,21) disposed below said conveyor (12).

10. Apparatus as claimed in claim 9, characterised in that said knife (79) is carried by a support frame (65) which extends in the horizontal direction and is capable of rotating about a vertical axis in order to regulate said predetermined line of travel, in that the magnets (134,135) of said holding means (120) are carried by a support frame (125) which extends in the horizontal direction and is capable of rotating about a vertical axis in order to position said magnets (134,135) along said line of cut, the support frame (65) of said cutting means (60) and the support frame (125) of said holding means (125) being mutually coupled via a linkage so that when they rotate they are always parallel to each other.

11. Apparatus as claimed in claim 8, 9 or 10, characterised in that said knife (79) is movable along a predetermined line of travel, and said measuring means comprises (i) a deviation detector for detecting the amount of deviation of said knife (79) from said predetermined line of travel, (ii) a position detector for detecting the position of said knife (79) along said predetermined line of travel and (iii) calculating means (197) for calculating the inclination angle of a cut line on the basis of signals supplied by said deviation detector and said position detector.

12. Apparatus as claimed in claim 11, characterised in that said calculating means (197) compares the inclination angle of the line of cut at the leading end of the belt-like member (15b) with the inclination angle of the line of cut at the trailing end of the belt-like member (15b) to calculate the amount of correction for the inclination angle, and said holding means (120) rotates according to the calculated amount of correction for the inclination angle to correct the inclination angle of the trailing end of the belt-like member (15b).

13. An apparatus as claimed in claim 11 or claim 12, wherein said deviation detector is a differential transformer (113), and said position detector is an approach switch (93) which is disposed in the proximity of means (88) for driving said knife (79) via a belt and pulley (84), and which is arranged to detect the amount of rotation of said pulley (84).

14. An apparatus as claimed in claim 11 or claim 12, characterised in that said knife (79) is carried by a travelling support member (306) which is drivable along said predetermined line of travel by belts (312,319) and pulleys (311,312,317,318), said knife also being movable in a direction at right angles to said predetermined line of travel, said deviation detector being composed of a distance sensor (320) which is movable in unison with said knife (79) and is located opposite a side surface of said travelling support member (306), and said position detector being composed of a fixed reflection type optical sensor (321) disposed opposite to one of said pulleys (311).

15. Apparatus as claimed in any one of claims 8 to 14, characterised in that said separating means comprises a casing (165) which is disposed on the upstream side of said conveyor (12) and is vertically movable above an end portion of the raw material (15) for belt-like member (15b), and magnets (169) accommodated within said casing (169), said casing and said magnets being elongate in the direction of travel of said conveyor belt (12).

## Patentansprüche

1. Verfahren zum Ausrichten eines riemenähnlichen Bauelements (15b) auf einer zylindrischen Trommel (1), wobei das riemenähnliche Bauelement (15b) durch Schneiden von Rohmaterial (15) für das riemenähnliche Bauelement an zwei Orten vorbereitet, von einem Fördermittel (12) befördert, um die Trommel (1) gewickelt und auf ihr befestigt wird, umfassend die folgenden Schritte:
(i) das Anbringen eines ersten, geneigten Schnitts quer zum Rohmaterial (15), geeignet zum Bilden einer vorderen Endkante des riemenähnlichen Bauelements (15b) und das Messen des Neigungswinkels des ersten Schnitts im Rohmaterial (15);
(ii) das Befördern des Rohmaterials (15) um eine vorbestimmte Entfernung;
(iii) das Anbringen eines zweiten, geneigten Schnitts quer zum Rohmaterial (15) unter einem ähnlichen Winkel wie beim ersten Schnitt, geeignet zum Bilden einer hinteren Endkante des riemenähnlichen Bauelements (15b), und das Messen des Neigungswinkels des zweiten Schnitts im Rohmaterial (15);
(iv) das Befördern des Rohmaterials (15) um eine zweite, vorbestimmte Entfernung und das Justieren der Lage des hinteren Endteils des riemenähnlichen Bauelements (15b), ausgehend von den gemessenen Neigungswinkeln der jeweiligen Schnitte, so daß die hintere Endkante parallel zur vorderen Endkante ist; und
(v) das Befördern des riemenähnlichen Bauelements (15b) in dieser korrigierten Anordnung und das Wickeln des Bauelements um die zylindrische Trommel (1) durch Drehen der Trommel (1), wobei sich die vordere und die hintere Endkante decken;
dadurch gekennzeichnet, daß das Rohmaterial (15) in den Schritten (i) und (iii) auf einer Schneide-Halte-Vorrichtung (110) geschnitten wird, während es fest vom Fördermittel (12) und der Schneide-Halte-Vorrichtung (110) angezogen wird, wobei in den Schritten (ii) und (iv) die vorderen und hinteren Endkanten jeweils mit einer Haltevorrichtung (120) von der Schneide-Halte-Vorrichtung (110) abgehoben, darüber befördert, dann fest vom Fördermittel (12) angezogen und vom Fördermittel (12) jeweils um erste und zweite, vorbestimmte Entfernungen befördert werden,
und dadurch, daß das noch ungeschnittene Rohmaterial (15) für das riemenähnliche Bauelement vom Fördermittel (12) getrennt ist, wenn das riemenähnliche Bauelement (15b) um die Trommel (1) gewickelt wird.

2. Verfahren zum Ausrichten eines riemenähnlichen Bauelements (15b) nach Anspruch 1, dadurch gekennzeichnet, daß das Rohmaterial (15) für das riemenähnliche Bauelement (15b) von einem Messer (79) geschnitten wird, das sich entlang einer vorgegebenen Bewegungslinie bewegt, nachdem das zu schneidende Rohmaterial (15) über seine ganze Länge fest von der Schneide-Halte-Vorrichtung (110) angezogen wird,
und dadurch daß die Neigungswinkel des ersten und des zweiten Schnitts gemessen werden durch Erfassen der Größe der Abweichung des Messers (79) von der vorgegebenen Bewegungslinie und der Lage des Messers (79) auf der vorgegebenen Bewegungslinie.

3. Verfahren zum Ausrichten eines riemenähnlichen Bauelements (15b) nach Anspruch 1 oder 2, dadurch gekennzeichnet, daß die Lage des hinteren Endteils justiert wird durch: das Vergleichen der Neigungswinkel der ersten und der zweiten Schnitte im Rohmaterial (15), um den Abweichungswinkel der hinteren Endkante von der vorderen Endkante zu bestimmen; das Halten der hinteren Endkante des riemenähnlichen Bauelements (15b) und der vorderen Endkante des nachfolgenden Rohmaterials (15) auf beiden Seiten der Schnittlinie und das gleichzeitige Trennen der Kanten von der Schneide-Halte-Vorrichtung (110) und dem Förderband (12); und das Ändern der Haltelage der hinteren Endkante um einen Winkel, der gleich dem Abweichungswinkel ist.

4. Verfahren zum Ausrichten eines riemenähnlichen Bauelements (15b) nach Anspruch 1, 2 oder 3, dadurch gekennzeichnet, daß durch wahlweises Hinbewegen einer Anzahl unter dem Förderband (12) angebrachter Magnete (18, 19, 20, 21) zu diesem Förderband (12) das riemenähnliche Bauelement (15b) fest vom Förderband (12) angezogen wird, und daß das riemenähnliche Bauelement (15b) durch wahlweises Wegbewegen der Magnete (18, 19, 20, 21) vom Förderband (12) von diesem getrennt wird.

5. Verfahren zum Ausrichten eines riemenähnlichen Bauelements (15b) nach irgendeinem der vorhergehenden Ansprüche, dadurch gekennzeichnet, daß das Rohmaterial (15) auf einer Schneide-Halte-Vorrichtung geschnitten wird, die ein Amboß (110) aus paramagnetischem oder nichtmagnetischem Material ist, wobei das riemenähnliche Bauelement (15b) fest vom Amboß (110) angezogen wird, indem ein Magnet (20) nahe an den Amboß (110) hinbewegt wird, und vom Amboß (110) getrennt wird, indem der Magnet (20) vom Förderband (12) wegbewegt wird.

6. Verfahren zum Ausrichten eines riemenähnlichen Bauelements (15b) nach irgendeinem der vorhergehenden Ansprüche, dadurch gekennzeichnet, daß das riemenähnliche Bauelement (15b) um die zylindrische Trommel (1) gewickelt und auf ihr befestigt wird durch: das Berühren und das Befestigen der vorderen Spitze des riemenähnlichen Bauelements (15b), das fest vom Förderband angezogen wird, auf der zylindrischen Trommel (1); das Wickeln des riemenähnlichen Bauelements (15b) um die Trommel (1), während die Umfangsgeschwindigkeit der Trommel (1) und die geradlinige Geschwindigkeit des Förderbands (12) angeglichen werden; das Aneinanderstoßen der vorderen Spitze und der hinteren Spitze des riemenähnlichen Bauelements (15b); und das gegenseitige Verbinden der vorderen und der hinteren Spitzen ohne Überlappung oder Abstand.

7. Einrichtung, geeignet zum Ausrichten eines riemenähnlichen Bauelements (15b) auf einer zylindrischen Trommel (1), wobei das riemenähnliche Bauelement (15b) durch Schneiden von Rohmaterial (15) für das riemenähnliche Bauelement an zwei Stellen vorbereitet, von einem Fördermittel (12) befördert, um die Trommel (1) gewickelt und darauf befestigt wird, und die Einrichtung umfaßt
ein Fördermittel (12) zum Befördern des Rohmaterials (15);
eine Schneidevorrichtung (60) zum Anbringen erster und zweiter, geneigter Schnitte quer zum Rohmaterial (15) zum Bilden vorderer und hinterer Endkanten des riemenähnlichen Bauelements (15b);
eine Haltevorrichtung (120) zum Halten benachbarter Endteile des riemenähnlichen Bauelements (15b) und des Rohmaterials (15) unabhängig voneinander auf beiden Seiten der Schnittlinie, während die Konfiguration der Endteile aufrechterhalten wird;
Meßvorrichtungen (93, 113, 182) zum Messen des Neigungswinkels des ersten und des zweiten Schnitts im Rohmaterial (15); und
eine Korrekturvorrichtung (102) zum Korrigieren des Neigungswinkels der hinteren Endkante des riemenähnlichen Bauelements (15b) durch Ändern der Lage der Haltevorrichtung (120), um die hintere Endkante mit Lageparametern in Übereinstimmung zu bringen, die von der vorderen Endkante vorgegeben und mit den Meßvorrichtungen (93, 113, 182) gemessen wurden,
dadurch gekennzeichnet, daß die Einrichtung zudem umfaßt eine Trennvorrichtung, geeignet zum Trennen des noch ungeschnittenen Rohmaterials (15) für das riemenähnliche Bauelement von der Fördervorrichtung, eine Schneide-Halte-Vorrichtung (110) und eine Vorrichtung zum festen Anziehen des Rohmaterials (15) an die Schneide-Halte-Vorrichtung (110) und das Fördermittel (12), wobei das Rohmaterial (15) geschnitten wird, während es fest vom Fördermittel (12) und von der Schneide-Halte-Vorrichtung (110) angezogen wird,
und dadurch, daß die Haltevorrichtung (120) so angeordnet ist, daß sie die vorderen und hinteren Endkanten von der Schneide-Halte-Vorrichtung (110) abhebt und darüber befördert.

8. Einrichtung nach Anspruch 8, geeignet zum Gebrauch mit einem Rohmaterial (15) für das riemenähnliche Bauelement (15b), das aus mit Stahlcord (16) verstärktem Gummi besteht, wobei in der Einrichtung (a) die Schneidevorrichtung (60) ein rundes, scheibenförmiges Messer (79) enthält, dazu angepaßt, sich im wesentlichen parallel zu den Stahlcorden (16) über das Rohmaterial (15) zu bewegen und es zu schneiden, (b) die Schneide-Halte-Vorrichtung einen Amboß (110) enthält, der aus paramagnetischem oder nichtmagnetischem Material hergestellt und unter dem Rohmaterial (15) für das riemenähnliche Bauelement (15b) angebracht ist, um die Kante des Messers aufzunehmen, und (c) die Vorrichtung zum festen Anziehen des Rohmaterials (15) an die Schneide-Halte-Vorrichtung (110) und das Fördermittel (12) Magnete (17, 18, 19, 20, 21) enthält, die unter dem Amboß (110) und dem Fördermittel (12) angebracht sind und das Rohmaterial (15) abhängig von ihrer Lage auf den Amboß (110) und das Fördermittel (12) ziehen oder es loslassen.

9. Einrichtung nach Anspruch 8, wobei die Haltevorrichtung (120) Magnete (134, 135) enthält, die auf dem Fördermittel (12) vertikal verschiebbar sind, und die Anziehungskraft der Magnete (134, 135) der Haltevorrichtung (120) größer ist als die Anziehungskraft der Magnete (17, 18, 19, 21), die unter dem Fördermittel (12) angebracht sind.

10. Einrichtung nach Anspruch 9, dadurch gekennzeichnet, daß das Messer (79) von einem Halterahmen (65) getragen wird, der sich in horizontaler Richtung erstreckt und sich um eine vertikale Achse drehen kann, um die vorbestimmte Bewegungslinie einzustellen,
und dadurch daß die Magnete (134, 135) der Haltevorrichtung (120) in einem Halterahmen (125) getragen werden, der sich in horizontaler Richtung erstreckt und sich um eine vertikale Achse drehen kann, um die Magnete (134, 135) entlang der Schnittlinie zu plazieren, wobei der Halterahmen (65) der Schneidevorrichtung (60) und der Halterahmen (125) der Haltevorrichtung (120) über eine Verbindung wechselseitig gekoppelt sind, so daß sie immer parallel zueinander sind, wenn sie sich drehen.

11. Einrichtung nach Anspruch 8, 9 oder 10, dadurch gekennzeichnet, daß das Messer (79) entlang einer vorbestimmten Bewegungslinie bewegbar ist, und daß die Meßvorrichtung umfaßt (i) einen Abweichungsfühler, geeignet zum Erfassen der Größe der Abweichung des Messers (79) von der vorbestimmten Bewegungslinie, (ii) einen Lagefühler, geeignet zum Erkennen der Lage des Messers (79) entlang der vorbestimmten Bewegungslinie, und (iii) eine Recheneinrichtung, geeignet zum Berechnen des Neigungswinkels einer Schnittlinie, ausgehend von Signalen, die der Abweichungsfühler und der Lagefühler liefern.

12. Einrichtung nach Anspruch 11, dadurch gekennzeichnet, daß die Recheneinrichtung (197) den Neigungswinkel der Schnittlinie am vorderen Ende des riemenähnlichen Bauelements (15b) mit dem Neigungswinkel der Schnittlinie am hinteren Ende des riemenähnlichen Bauelements (15b) vergleicht, um die Größe der Korrektur für den Neigungswinkel zu berechnen, und daß sich die Haltevorrichtung (120) entsprechend der berechneten Korrekturgröße für den Neigungswinkel dreht, um den Neigungswinkel des hinteren Endes des riemenähnlichen Bauelements (15b) zu korrigieren.

13. Einrichtung nach Anspruch 11 oder 12, wobei der Abweichungsfühler ein Differentialtransformator (113) und der Lagefühler ein Annäherungsschalter (93) ist, der nahe bei einer Vorrichtung (88) angebracht ist, geeignet zum Antreiben des Messers (79) über einen Riemen und eine Riemenscheibe (84), und der so angeordnet ist, daß er die Größe der Drehung der Riemenscheibe (84) erkennt.

14. Einrichtung nach Anspruch 11 oder 12, dadurch gekennzeichnet, daß das Messer (79) von einem beweglichen Haltebauteil (306) getragen wird, das entlang der vorbestimmten Bewegungslinie mit Riemen (312, 319) und Riemenscheiben (311, 312, 317, 318) bewegt werden kann, wobei das Messer auch im rechten Winkel zur vorbestimmten Bewegungslinie bewegt werden kann, der Abweichungsfühler aus einem Entfernungssensor (320) zusammengesetzt ist, der zusammen mit dem Messer (79) bewegt werden kann und gegenüber einer Seitenoberfläche des beweglichen Haltebauteils (306) angeordnet ist, und der Lagefühler aus einem befestigten, optischen Reflexionssensor (321) zusammengesetzt ist, der gegenüber einer der Riemenscheiben (311) angebracht ist.

15. Einrichtung nach irgendeinem der Ansprüche 8 bis 14, dadurch gekennzeichnet, daß die Trennvorrichtung umfaßt ein Gehäuse (165), das an der Oberseite des Fördermittels (12) angebracht und vertikal um einen Endteil des Rohmaterials (15) für das riemenähnliche Bauelement (15b) beweglich ist, und innerhalb des Gehäuses (165) untergebrachte Magnete (169), wobei sich das Gehäuse und die Magnete in Bewegungsrichtung des Förderbands (12) verlängern.

## Revendications

1. Procédé pour aligner un élément en forme de bande (15b) sur un tambour cylindrique (1), dans lequel l'élément en forme de bande (15b) est préparé par découpage en deux endroits d'un matériau brut (15) destiné à l'élément en forme de bande, est acheminé par un convoyeur (12) et est enroulé et collé autour du tambour (1), comprenant les étapes consistant à:
(i) réaliser une première coupe inclinée dans ledit matériau brut (15) afin de constituer le bord d'extrémité antérieure de l'élément en forme de bande (15b) et mesurer l'angle d'inclinaison de ladite première coupe sur ledit matériau brut (15),
(ii) faire avancer ledit matériau brut (15) sur une première distance prédéterminée,
(iii) réaliser une seconde coupe inclinée dans le matériau brut (15) suivant un angle similaire à celui de ladite première coupe afin de former le bord d'extrémité postérieure de l'élément en forme de bande (15b) et mesurer l'angle d'inclinaison de ladite seconde coupe sur ledit matériau brut (15),
(iv) faire avancer l'élément en forme de bande (15b) sur une seconde distance prédéterminée et ajuster la position de la partie d'extrémité postérieure de l'élément en forme de bande (15b), en se basant sur les angles d'inclinaison mesurés des coupes respectives, de façon à ce que le bord de l'extrémité postérieure soit parallèle au bord de l'extrémité antérieure, et
(v) faire avancer l'élément en forme de bande (15b) dans cette configuration corrigée et l'entourer autour du tambour cylindrique (1), avec lesdits bords d'extrémités antérieure et postérieure qui coïncident, par rotation du tambour (1),
**caractérisé** en ce que, dans les étapes (i) et (iii), ledit matériau brut (15) est découpé sur un moyen (110) de support de coupe tout en étant attiré fixement vers ledit convoyeur (12) et ledit moyen (110) de support de coupe,
en ce que, dans les étapes (ii) et (iv), les bords d'extrémités antérieure et postérieure sont respectivement soulevés dudit moyen (110) de support de coupe et acheminés au-dessus de lui par des moyens de retenue (120) et sont ensuite attirés fixement vers ledit convoyeur (12) et acheminés sur lesdites première et seconde distance respectives par ledit convoyeur (12),
et en ce que le matériau brut (15) destiné à l'élément en forme de bande qui n'a pas été découpé est séparé du convoyeur (12) quand ledit élément en forme de bande (15b) est enroulé autour dudit tambour (1).

2. Procédé pour aligner un élément en forme de bande (15b) selon la revendication 1, caractérisé en ce que le matériau brut (15) destiné à l'élément en forme de bande (15b) est découpé à l'aide d'un couteau (79) qui se déplace le long d'une ligne de trajet préétablie après que le matériau brut (15) devant être découpé a été attiré fixement vers ledit moyen (110) de support de coupe sur toute sa largeur, et en ce que les angles d'inclinaison desdites première et seconde coupes sont mesurés par détection de la quantité de déviation dudit couteau (79) par rapport à ladite ligne de trajet préétablie et de la position dudit couteau (79) le long de ladite ligne de trajet préétablie.

3. Procédé pour aligner un élément en forme de bande (15b) selon la revendication 1 ou la revendication 2, caractérisé en ce que la position de la partie d'extrémité postérieure est réglée par:
- comparaison des angles d'inclinaison des première et seconde coupes sur ledit matériau brut (15) pour obtenir l'angle de déviation du bord d'extrémité postérieure par rapport au bord de l'extrémité antérieure,
- maintien du bord d'extrémité postérieure de l'élément en forme de bande (15b) et du bord d'extrémité antérieure du matériau brut (15) qui suit de chaque côté de la ligne de coupe et, simultanément, séparation de ceux-ci du moyen (110) de support de coupe et du convoyeur (12), et
- modification de la position de maintien de ladite partie d'extrémité postérieure du même angle que ledit angle de déviation.

4. Procédé pour aligner un élément en forme de bande (15b) selon la revendication 1, 2 ou 3, caractérisé en ce que l'élément en forme de bande (15b) est fixement attiré vers le convoyeur (12) par déplacement sélectif d'une pluralité d'aimants (18, 19, 20, 21), disposés en-dessous dudit convoyeur (12), en direction dudit convoyeur (12) et est séparé dudit convoyeur (12) par déplacement sélectif desdits aimants (18, 19, 20, 21) à l'écart dudit convoyeur (12).

5. Procédé pour aligner un élément en forme de bande (15b) selon l'une quelconque des précédentes revendications, caractérisé en ce que le matériau brut (15) est découpé sur un moyen de support de coupe qui est une enclume (110) faite d'un matériau paramagnétique ou non-magnétique, l'élément en forme de bande (15b) étant fixement attiré vers ladite enclume (110) grâce au déplacement d'un aimant (20) à proximité de ladite enclume (110) et étant séparé de ladite enclume (110) par le déplacement dudit aimant (20) à l'écart dudit convoyeur (12).

6. Procédé pour aligner un élément en forme de bande (15b) selon l'une quelconque des précédentes revendications, caractérisé en ce que l'élément en forme de bande (15b) est enroulé et collé autour dudit tambour cylindrique (1) par:
- mise en contact et collage du bout antérieur de l'élément en forme de bande (15b), qui est fixement attiré vers le convoyeur, sur ledit tambour cylindrique (1),
- enroulement dudit élément en forme de bande (15b) autour dudit tambour (1) pendant que l'on rend égales la vitesse tangentielle dudit tambour (1) et la vitesse linéaire d'acheminement dudit convoyeur (12),
- mise bout à bout dudit bout antérieur et du bout postérieur dudit élément en forme de bande (15b), et
- réunion desdits bouts antérieur et postérieur l'un à l'autre, sans chevauchement ni séparation.

7. Appareil pour aligner un élément en forme de bande (15b) sur un tambour cylindrique (1), dans lequel l'élément en forme de bande (15b) est préparé par découpage en deux endroits d'un matériau brut (15) destiné à l'élément en forme de bande, est acheminé par un convoyeur (12) et est enroulé et collé autour du tambour (1), comprenant:
- un convoyeur (12) pour acheminer ledit matériau brut (15),
- des moyens de coupe (60) pour réaliser des première et seconde coupes inclinées dans ledit matériau brut (15) afin de former des bords d'extrémités antérieure et postérieure de l'élément en forme de bande (15b),
- des moyens de maintien (120) pour maintenir les parties d'extrémité adjacentes de l'élément en forme de bande (15b) et du matériau brut (15) de manière indépendante de chaque côté de la ligne de coupe tout en conservant les configurations des parties d'extrémités,
- des moyens de mesure (93, 113, 182) pour mesurer l'angle d'inclinaison desdites première et seconde coupes sur ledit matériau brut (15), et
- des moyens de correction (102) pour corriger l'angle d'inclinaison du bord de l'extrémité postérieure de l'élément en forme de bande (15b) par modification de la position desdits moyens de maintien (120) afin de faire correspondre le bord de l'extrémité postérieure avec des paramètres de position, pris par le bord de l'extrémité antérieure et mesurés par lesdits moyens de mesure (93, 113, 182),
**caractérisé** en ce que l'appareil comprend en outre un moyen de séparation pour séparer du moyen de convoyage le matériau brut (15) destiné à l'élément en forme de bande (15b) qui n'a pas encore été découpé, un moyen (110) de support de coupe et des moyens pour attirer fixement le matériau brut (15) vers ledit convoyeur (12) et ledit moyen (110) de support de coupe, ledit matériau brut (15) étant découpé alors qu'il est fixement attiré vers ledit convoyeur (12) et ledit moyen (110) de support de coupe, et en ce que ledit moyen de maintien (120) est conçu pour soulever les bords d'extrémités antérieure et postérieure dudit moyen (110) de support de coupe et les faire avancer au-dessus de celui-ci.

8. Appareil selon la revendication 7, à utiliser avec un matériau brut (15) destiné à un élément en forme de bande (15b) qui est fait de caoutchouc renforcé par des câbles d'acier (16), appareil dans lequel:
(a) lesdits moyens de coupe (60) comprennent un couteau circulaire (79) en forme de disque, apte à se déplacer sur ledit matériau brut (15) et à le découper sensiblement parallèlement auxdits câbles d'acier (16),
(b) ledit moyen de support de coupe comprend une enclume (110) faite d'un matériau non-magnétique ou paramagnétique, placée pour se trouver en-dessous dudit matériau brut (15) destiné à l'élément en forme de bande (15b) afin de recevoir le fil du couteau, et
(c) lesdits moyens pour attirer fixement ledit matériau brut (15) vers le moyen (110) de support de coupe et le convoyeur comprennent des aimants (17, 18, 18, 20, 21) placés en-dessous de ladite enclume (110) et dudit convoyeur (12), qui attirent ledit matériau brut (15) sur ladite enclume (110) et ledit convoyeur ou qui l'en libèrent, suivant leur position.

9. Appareil selon la revendication 8, dans lequel lesdits moyens de maintien (120) comprennent des aimants (134, 135) qui peuvent être déplacés verticalement au-dessus dudit convoyeur (12), la force d'attraction desdits aimants (134, 135) desdits moyens de maintien (120) étant supérieure à la force d'attraction des aimants (17, 18, 19, 21) placés en-dessous dudit convoyeur (12).

10. Appareil selon la revendication 9, caractérisé en ce que ledit couteau (79) est porté par un bâti de support (65) qui s'étend dans la direction horizontale et est capable de tourner autour d'un axe vertical afin de régler ladite ligne prédéterminée de trajet, en ce que les aimants (134, 135) desdits moyens de maintien (120) sont portés par un bâti de support (125) qui s'étend dans la direction horizontale et est capable de tourner autour d'un axe vertical afin de positionner lesdits aimants (134, 135) le long de ladite ligne de coupe, le bâti de support (65) dudit moyen de coupe (60) et le bâti de support (125) desdits moyens de maintien (120) étant mutuellement accouplés par une liaison de telle sorte qu'ils soient toujours parallèles l'un à l'autre lorsqu'ils tournent.

11. Appareil selon la revendication 8, 9, ou 10, caractérisé en ce que ledit couteau (79) est mobile le long d'une ligne prédéterminée de trajet et lesdits moyens de mesure comprennent:
(i) un détecteur de déviation pour détecter la quantité de déviation dudit couteau (79) par rapport à ladite ligne de trajet prédéterminée,
(ii) un détecteur de position pour détecter la position du couteau (79) le long de ladite ligne de trajet prédéterminée, et
(iii) un moyen de calcul (197) pour calculer l'angle d'inclinaison d'une ligne de coupe en se basant sur des signaux fournis par ledit détecteur de déviation et ledit détecteur de position.

12. Appareil selon la revendication 11, caractérisé en ce que ledit moyen de calcul (197) compare l'angle d'inclinaison de la ligne de coupe au niveau de l'extrémité antérieure de l'élément en forme de bande (15b) avec l'angle d'inclinaison de la ligne de coupe au niveau de l'extrémité postérieure de l'élément en forme de bande (15b) pour calculer la quantité de correction de l'angle d'inclinaison, et lesdits moyens de maintien (120) tournent en fonction de la quantité de correction calculée pour l'angle d'inclinaison afin de corriger l'angle d'inclinaison de l'extrémité postérieure de l'élément en forme de bande (15b).

13. Appareil selon la revendication 11 ou la revendication 12, dans lequel ledit détecteur de déviation est un transformateur différentiel (113) et ledit détecteur de position est un interrupteur d'approche (93) qui est placé à proximité du moyen (88) qui entraîne ledit couteau (79) à l'aide d'une courroie et d'une poulie (84) et qui est conçu pour détecter la quantité de rotation de ladite poulie (84).

14. Appareil selon la revendication 11 ou la revendication 12, caractérisé en ce que ledit couteau (79) est porté par un organe de support (306) déplaçable qui peut être entraîné le long de ladite ligne de trajet prédéterminée par des courroies (312, 319) et des poulies (311, 312, 317, 318), ledit couteau étant également mobile dans une direction perpendiculaire à ladite ligne de trajet prédéterminée, ledit détecteur de déviation étant composé d'un capteur de distance (320) qui se déplace de concert avec ledit couteau (79) et est placé en vis-à-vis d'une surface latérale dudit organe de support (306) déplaçable, et ledit détecteur de position étant composé d'un capteur optique fixe (321), du type à réflexion, placé en vis-à-vis de l'une des poulies (311).

15. Appareil selon l'une quelconque des revendications 8 à 14, caractérisé en ce que lesdits moyens de séparation comprennent un boîtier (165), qui est placé sur le côté amont dudit convoyeur (12) et qui peut être déplacé verticalement au-dessus d'une partie d'extrémité du matériau brut (15) destiné à l'élément en forme de bande (15b), et des aimants (169) logés dans ledit boîtier (165) , ledit boîtier et lesdits aimants étant allongés dans la direction de déplacement dudit convoyeur (12).
